# EUROPÄISCHE PATENTANMELDUNG

(11) **EP 1 635 598 A2**
(43) Veröffentlichungstag der Anmeldung: **15.03.2006**
(21) Anmeldenummer: 05025923.3
(22) Anmeldetag: 03.04.1997
(51) Int. Cl.: H04Q 7/38, H04Q 7/24, H04Q 11/04

(54) **Kanalwechselsteuerung in einem ISDN-System eingebundenen DECT-spezifischen RLL/WLL-Teilsystem**

(30) Priorität: 04.04.1996 DE 19613636; 24.06.1996 DE 19625141
(62) Teilanmeldung aus: 97921602.5
(71) Anmelder: SIEMENS AKTIENGESELLSCHAFT, 80333 München (DE)
(72) Erfinder: Flake, Horst, 82041 Oberhaching (DE); Kordsmeyer, Martin, 48477 Hörstel (DE)

(57) **Zusammenfassung**

Um in einem Telekommunikationsteilsystem, das in einem Telekommunikationssystem als lokale Nachrichtenübertragungsschleife eingebunden ist - insbesondere eines in einem ISDN-System eingebundenen DECT-spezifischen RLL/WLL-Teilsystems - den durch die Übertragung von Systemnachrichten in der lokale Nachrichtenübertragungsschleife bedingten Wechsel von einem Telekommunikationskanal - z.B. den im DECT-Standard definierten C_{f}-Kanal - zu einem Telekommunikationskanal - z.B. den im DECT-Standard definierten Cₛ-Kanal- durch zwei Befehle, einen als Umschaltkommando ausgelegten ersten befehl und einen als Umschaltantwort ausgelegten zweiten Befehl, zu steuern, werden nach der Übertragung der Umschaltantwort und vor der Übertragung der Systeminformationen auf dem anderen Teilsystemkanal vorgegebene teilsystemspezifische Parameter zurückgesetzt.

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrecke drahtgebunden ist oder auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, PHS, PDC etc. [vgl. IEEE Communications Magazine, January 1995, Seiten 50 bis 57; D.D. Falconer et al: "Time Division Multiple Access Methods for Wireless Personal Communications"] drahtlos erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden. Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Verfahren zur Steuerung des Wechsels von Telekommunikationskanälen eines in einem Telekommunikationssystem als lokale Nachrichtenübertragungsschleife eingebundenen Telekommunikationsteilsystem - insbesondere eines in einem ISDN-System eingebundenen DECT-spezifischen RLL/WLL-Teilsystems (**R**adio **L**ocal **L**oop/**W**ireless Local Loop) - gemäß dem Oberbegriff des Patentanspruches 1.

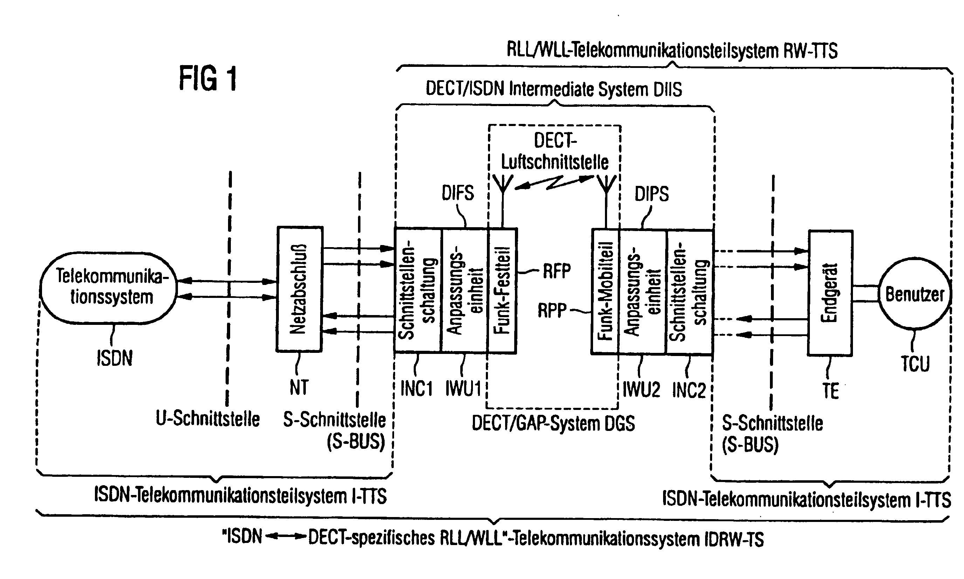

FIGUR 1 zeigt ausgehend von den Druckschriften "*Nachrichtentechnik Elektronik, Berlin 45* (1995) *Heft 1, Seiten 21 bis 23 und Heft* 3 *Seiten 29 und 30" sowie IEE Colloquium 1993,* 173; *(1993), Seiten 29*/*1 - 29*/*7; W.Hing, F.Halsall: "Cordless access to the ISDN basic rate service"* auf der Basis eines DECT/ISDN Intermediate Systems DIIS gemäß der *ETSI-Publikation prETS 300xxx, Version 1.10, September 1996* ein **"I**SDN ↔ **D**ECT-spezifisches **R**LL/**W**LL"-**T**elekommunikations**s**ystem IDRW-TS (**I**ntegrated **S**ervices **D**igital **N**etwork ↔ **R**adio in the **L**ocal **L**oop/**W**ireless in the **L**ocal **L**oop) mit einem **I**SDN-**T**elekommunikations**t**eil**s**ystem I-TTS *[vgl. Druckschrift "Nachrichtentechnik Elektronik, Berlin 41-43, **T**eil: 1 bis 10, **T1**: (1991) Heft 3, Seiten 99 bis 102; **T2**:* (1991) *Heft 4, Seiten 138 bis 143; **T3**:* (1991) *Heft 5, Sei ten 179 bis 182 und Heft 6, Sei ten 219 bis 220; **T4**:* (1991) *Heft 6, Sei ten 220 bis 222 und (1992) Heft 1, Seiten 19 bis 20; **T5**: (1992) Heft 2, Seiten 59 bis 62 und* (1992) *Heft* 3, *Seiten* 99 *bis 102; **T6**: (1992) Heft* 4, *Seiten 150 bis 153; **T7**:* (1992) *Heft 6, Seiten 238 bis 241; **T8**:* (1993) *Heft 1, Seiten* 29 *bis 33; **T9**:* (1993) *Heft* 2, *Seiten 95 bis* 97 *und* (1993) *Heft 3, Seiten 129 bis 135; **T10**: (1993) Heft 4, Seiten 187 bis 190;"]* und einem DECT-spezifischen **R**LL/**W**LL-**T**elekommunikations**t**eil**s**ystem RW-TTS.

Das DECT/ISDN Intermediate System DIIS bzw. das RLL/WLL-Telekommunikationsteilsystem RW-TTS basiert dabei vorzugsweise auf ein **D**ECT/**G**AP-**S**ystem DGS [**D**igital **E**nhanced (früher: **E**uropean) **C**ordless **T**elecommunication; vgl. **(1)**: Nachrichtentechnik Elektronik 42 (1992) Jan./Feb. Nr. 1, Berlin, DE; U. Pilger "Struktur des DECT-Standards", Seiten 23 bis 29 **in Verbindung mit** der ETSI-Publikation ETS 300175-1...9, Okt. 1992; **(2)**: Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3)**: tec 2/93 - Das technische Magazin von Ascom "Wege zur universellen mobilen Telekommunikation", Seiten 35 bis 42; **(4)**: Philips Telecommunication Review Vol. 49, No. 3, Sept. 1991, R.J. Mulder:" DECT, a universal cordless access system"; (5): WO 93/21719 (FIG 1 bis 3 mit dazugehöriger Beschreibung)]. Der GAP-Standard (**G**eneric **A**ccess **P**rofile) ist eine Untermenge des DECT-Standards, dem die Aufgabe zukommt, die Interoperabilität der DECT-Luftschnittstelle für Telefonanwendungen sicherzustellen *(vgl. ETSI-Publikation prETS 300444, April 1995).*

Das DECT/ISDN Intermediate System DIIS bzw. das RLL/WLL-Telekommunikationsteilsystem RW-TTS kann alternativ auch auf einem GSM-System basieren (**G**roupe **S**péciale **M**obile oder **G**lobal **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152). Stattdessen ist es im Rahmen eines hybriden Telekommunikationssystems auch möglich, dass das ISDN-Telekommunikationsteilsystem I-TTS als GSM-System ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsteilsystems I-TTS die eingangs erwähnten Systeme sowie zukünftige Systeme in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z.B. DECT-Kanälen) in klassischen leitungsgebundenen Telekommunikationssystemen, wie dem ISDN, gewinnt zunehmend an Bedeutung, insbesondere vor dem Hintergrund zukünftiger alternativer Netzbetreiber ohne eigenes komplettes Drahtnetz.

So sollen z.B. bei dem RLL/WLL-Telekommunikationsteilsystems RW-TTS die drahtlose Anschlusstechnik RLL/WLL (**R**adio in the **L**ocal **L**oop/**W**ireless in the **L**ocal **L**oop) z.B. unter der Einbindung des DECT-System DS dem ISDN-Teilnehmer ISDN-Dienste an Standard-ISDN-Schnittstellen verfügbar gemacht werden (vgl. FIGUR 1).

In dem "ISDN ↔ DECT-spezifisches RLL/WLL"-Telekommunikationssystem IDRW-TS nach FIGUR 1 ist ein Telekommunikationsteilnehmer (Benutzer) TCU (**T**ele-**C**ommunication **U**ser) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECT-spezifische und in dem RLL/WLL-Telekommunikationsteilsystem RW-TTS enthaltene- DECT/ISDN Intermediate System DIIS (erstes Telekommunikationsteilsystem), eine weitere standardisierte S-Schnittstelle (S-BUS), einen Netzabschluss NT (**N**etwork **T**ermination) und eine standardisierte U-Schnittstelle des ISDN-Telekommunikationsteilsystems I-TTS (zweites Telekommunikationsteilsystem) in die ISDN-Welt mit den darin verfügbaren Diensten eingebunden.

Das erste Telekommunikationsteilsystem DIIS besteht im Wesentlichen aus zwei Telekommunikationsschnittstellen, einer ersten Telekommunikationsschnittstelle DIFS (**D**ECT **I**ntermediate **F**ixed **S**ystem) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das erste Telekommunikationsteilsystem DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter-**W**orking **U**nit) und eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

Für ein DECT-spezifisches RLL-System als Träger für möglichst alle ISDN-Dienste im Teilnehmer-Anschluss bestehen dabei folgende allgemeinen Problemstellungen:
a) Nachbildung der ISDN-Kanal-Struktur (D-Kanal und 2 B-Kanäle), im Folgenden insbesondere des D-Kanals,
b) gute Bandbreite-Ökonomie; für ISDN besonders bedeutsam, da einige Dienste bereits zwei DECT-Kanäle für die B-Kanal-Datenrate von 64 kbps benötigen,
c) minimaler technischer Aufwand.

### Nachbildung des D-Kanals

### Eigenschaften des D-Kanals:

- Gemeinsamer Signalisierungskanal auf der C-Ebene (C-plane) für alle an den ISDN-Anschluss angeschlossenen Endgeräte TE (**T**erminal **E**ndpoint).
- Die TE-spezifischen Signalisierungskanäle zum Netz werden darin durch TE-individuelle Adressen TEI (**T**erminal **E**ndpoint **I**dentifier) separiert.
   Der Zugriffsmechanismus zum D-Kanal stellt TE-individuell die Reihenfolge der Nachrichten sicher.
- Durchsatzrate: 16 kbps
- Auslastung: abhängig von vielen Kriterien, in der Regel niedriger als Maximalkapazität; Stausituationen möglich, die jedoch wegen der hohen Kapazität schnell abbaubar sind.

### DECT-Kanäle:

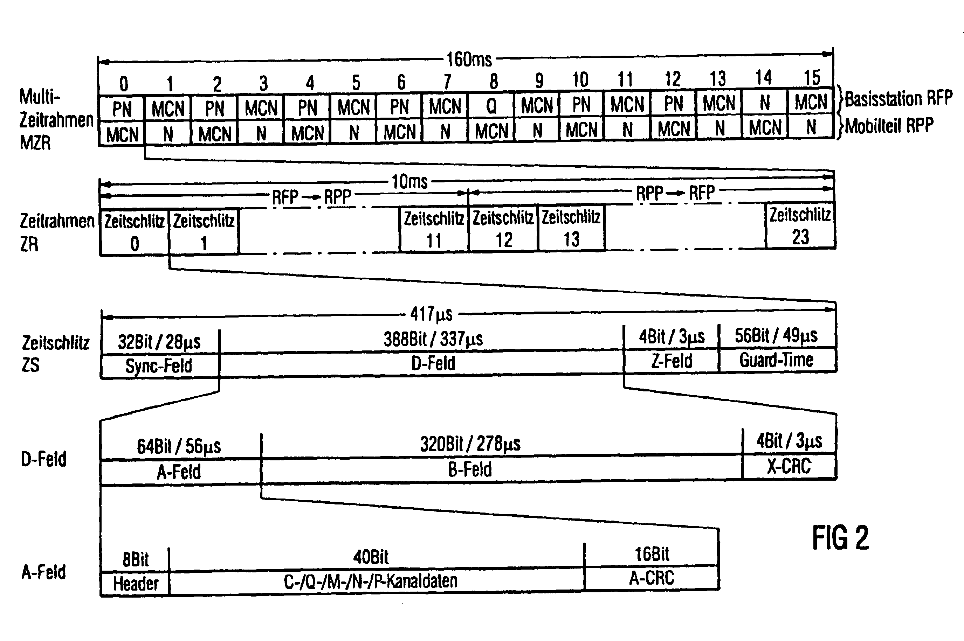

FIGUR 2 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems TKS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,90 GHz Funknachrichten nach dem TDMA-Prinzip gemäß FIGUR 2 in einer vorgegebenen zeitlichen Abfolge von der Basisstation RFP zum Mobilteil RPP und vom Mobilteil RPP zur Basisstation RFP (Duplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation RFP und Mobilteil RPP getrennt Informationen übertragen, die einen im DECT-Standard definierten C-,M-,N-, P-,Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation RFP → Mobilteil RPP" und weitere 12 Zeitschlitze ZS (Zeitschlitze 12 ... 23) für die Übertragungsrichtung "Mobilteil RPP → Basisstation RFP" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen.

### Eigenschaften:

- Verwendung von TDMA-Zeitschlitzen.
- Im Prinzip wird je Zeitschlitz ein Cₛ-Kanal (s = slow) zur Signalisierung [C-Ebene (C-plane) im DECT-Standard] und ein zugeordneter Kanal [U-Ebene (U-plane) im DECT-Standard] für die Benutzer- bzw. Nutzinformationen (Durchsatz: 32 kbps) verwendet.
- Durchsatz des Cₛ-Kanals: 2 kbps.
   Der DECT-Standard bietet auch andere Kanalstrukturen, z. B. einen C_{f}-Kanal (f = fast) an.
- Der C_{f}-Kanal belegt einen Zeitschlitz.
- Durchsatz des C_{f}-Kanals: 25.6 kbps.

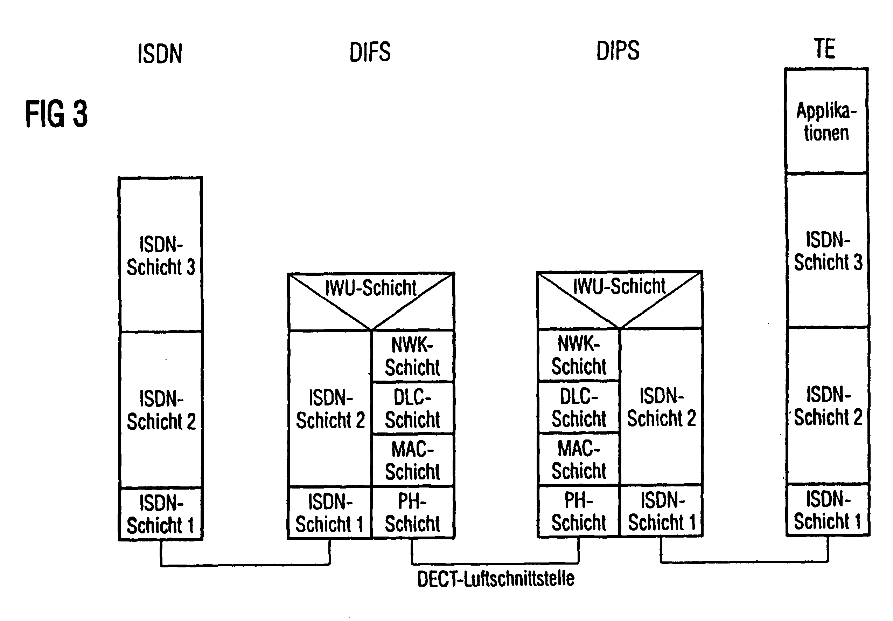

Figur 3 zeigt auf der Basis des OSI/ISO-Schichtenmodells [vgl. (1): Unterrichtsblätter - Deutsche Telekom Jg. 48, 2/1995, Seiten 102 bis 111; (2): ETSI-Publikation ETS 300175-1..9, Oktober 1992; (3): ETSI-Publikation ETS 300102, Februar 1992; (4): ETSI-Publikation ETS 300125, September 1991; (5): ETSI-Publikation ETS 300012, April 1992] ein Modell der C-Ebene des "ISDN ↔ DECT-spezifischen RLL/WLL"-Telekommunikationssystems IDRW-TS nach FIGUR 1.

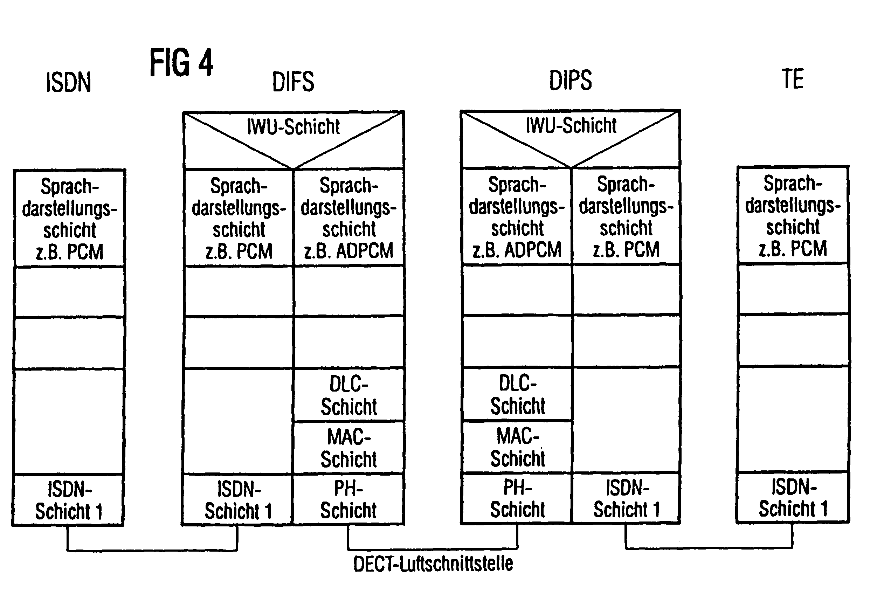

Figur 4 zeigt auf der Basis des OSI/ISO-Schichtenmodells [vgl. **(1):** Unterrichtsblätter - Deutsche Telekom Jg. 48, 2/1995, Seiten 102 bis 111; **(2):** ETSI-Publikation ETS 300175-1..9, Oktober 1992; **(3):** ETSI-Publikation ETS 300102, Februar 1992; **(4):** ETSI-Publikation ETS 300125, September 1991; **(5):** ETSI-Publikation ETS 300012, April 1992] ein Modell der U-Ebene für Sprachdatenübertragung des "ISDN ↔ DECT-spezifischen RLL/WLL"-Telekommunikationssystems IDRW-TS nach FIGUR 1.

### Bandbreite-Ökonomie

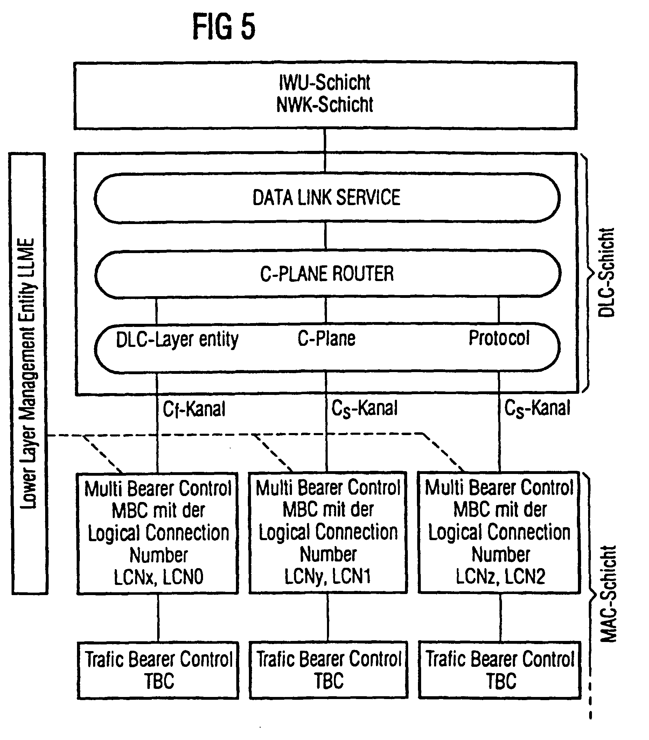

Die Cₛ-Kanalstruktur bietet für eine Standard-Sprachverbindung eine optimale Bandbreite-Ökonomie, da gemäß FIGUR 5 ausgehend von FIGUR 3 und 4 sowie unter Berücksichtigung der ETSI-Publikationen (ETS 300175-1, 10/1992, Kap. 7; ETS 300175-3, 10/1992, Kap. 4.1; ETS 300175-4, 10/1992, Kap. 4) nur ein Übertragungsweg (Bearer) - z.B. MBC mit der LCNy, LCN1 nach FIGUR 5 - bzw. eine Verbindung oder ein Zeitschlitz benötigt wird.

Die Verwendung des C_{f}-Kanals führt gemäß FIGUR 5 ausgehend von FIGUR 3 und 4 sowie unter Berücksichtigung der ETSI-Publikationen (ETS 300175-1, 10/1992, Kap. 7; ETS 300175-3, 10/1992, Kap. 4.1; ETS 300175-4, 10/1992, Kap. 4) zu einer geringerer Bandbreite-Ökonomie, da die U-Ebene (U-plane) selbst einen weiteren Übertragungsweg (Bearer) bzw. eine weitere Verbindung oder einen weiteren Zeitschlitz benötigt; d.h. es sind zwei Übertragungswege (Bearer) - z.B. MBC mit der LCN2,LCNz und MBC mit der LCNy, LCN1 nach FIGUR 5 - bzw. zwei Verbindung oder zwei Zeitschlitze für eine einfache Sprachverbindung notwendig.

Darüber hinaus sind für den Fall, dass zwei ISDN-B-Kanal-Verbindungen (Sprachverbindungen) bestehen, drei Übertragungswege (Bearer) - z.B. MBC mit der LCNx, LCN0, MBC mit der LCNy, LCN1 und MBC mit der LCNz, LCN2 nach FIGUR 5 - bzw. drei Verbindung oder drei Zeitschlitze erforderlich.

Während aus der Sicht der Kanalkapazität die Verwendung des C_{f}-Kanals zweckmäßig zu sein scheint, ist aus der Sicht der Bandbreite-Ökonomie die Verwendung des Cₛ-Kanals zweckmäßig.

Unabhängig davon, ob der C_{f}-Kanal oder der Cₛ-Kanal für den Verbindungsaufbau (Aufbau von Übertragungswegen) verwendet wird, muss es sichergestellt sein (vgl. FIGUR 5), dass zu jeder Zeit vom C_{f}-Kanal zum Cₛ-Kanal und umgekehrt gewechselt werden kann (Kanalwechsel zwischen Kanälen ungleicher Kanalkapazität). Darüber hinaus muss es aufgrund der Möglichkeit, dass im ISDN-System zwei Verbindungen (Übertragungswege) gleichzeitig aufgebaut werden können (2 B-Kanäle), sichergestellt sein, dass zwischen einem ersten Cₛ-Kanal und einem zweiten Cₛ-Kanal gewechselt werden kann (Kanalwechsel zwischen zwei Kanälen gleicher Kanalkapazität).

Die der Erfindung zugrundeliegende Aufgabe besteht darin, in einem Telekommunikationsteilsystem, das in einem Telekommunikationssystem als lokale Nachrichtenübertragungsschleife eingebunden ist - insbesondere eines in einem ISDN-System eingebundenen DECT-spezifischen RLL/WLL-Teilsystems - durch die Übertragung von Systeminformationen in der lokale Nachrichtenübertragungsschleife bedingte Wechsel von einem Telekommunikationskanal zu einem anderen Telekommunikationskanal ohne jeglichen Einfluss auf in dem Telekommunikationsteilsystem gewöhnlich übertragene Teilsysteminformationen auf einfache Weise zu steuern.

Diese Aufgabe wird ausgehend von dem im Oberbegriff des Patentanspruches 1 definierten Verfahren durch die im Kennzeichen des Patentanspruches 1 angegebenen Merkmale gelöst.

Die der Erfindung zugrundeliegende Idee besteht ausgehend davon, den Kanalwechsel in einem Telekommunikationsteilsystem, das in einem Telekommunikationssystem als lokale Nachrichtenübertragungsschleife eingebunden ist - insbesondere eines in einem ISDN-System eingebundenen DECT-spezifischen RLL/WLL-Teilsystems - der eingangs genannten und umrissenen Art durch zwei Befehle, einen als Umschaltkommando ausgelegten ersten Befehl und einen als Umschaltantwort ausgelegten zweiten Befehl, zu steuern, darin, dass nach der Übertragung der Umschaltantwort und vor der Übertragung der Systeminformationen auf dem anderen Teilsystemkanal vorgegebene teilsystemspezifische Parameter zurückgesetzt werden.

Gemäß der Weiterbildung der Erfindung nach Anspruch 2 ist es von Vorteil, wenn der Kanalwechsel gezielt angestoßen wird.

Gemäß der Weiterbildung der Erfindung nach Anspruch 4 ist es von Vorteil, wenn eine Zeitsteuerung vorgesehen wird, gemäß der beim Ausbleiben der Umschaltantwort auf das Umschaltkommando ein weiteres Umschaltkommando übertragen wird.

Gemäß der Weiterbildung der Erfindung nach Anspruch 6 ist es von Vorteil, wenn mit der Umschaltantwort bestätigt wird, dass eine Umschaltung bereits vorgenommen worden ist

Gemäß der Weiterbildung der Erfindung nach Anspruch 7 ist es von Vorteil, wenn der Kanalwechsel durch eine zeitlich begrenzte Unterbrechung der Informations- bzw. Nachrichtenübertragung in dem Telekommunikationsteilsystem und anschließender Wiederaufnahme der Informations- bzw. Nachrichtenübertragung angestoßen und durchgeführt wird.

Dies geschieht vorzugsweise - bei einem Kanalwechsel von einem DECT-spezifischen C_{f}-Kanal zu einem DECT-spezifischen Cₛ₋Kanal und umgekehrt bzw. bei einem Kanalwechsel von einem ersten DECT-spezifischen Cₛ-Kanal zu einem zweiten DECT-spezifischen Cₛ-Kanal gemäß der Ansprüche 45 und 46 durch ein in das DECT-Protokoll als Umschaltkommando eingebundenes ATTRIBUTE_REQUEST-Informationselement und ein in das DECT-Protokoll als Umschaltantwort eingebundenes ATTRIBUTE_ CONFIRM-Informationselement bzw. gemäß den Ansprüchen 47 und 48 durch ein in das DECT-Protokoll als Umschaltkommando eingebundenes SUSPEND- Informationselement und ein in das DECT-Protokoll als Umschaltantwort eingebundenes RESUME- Informationselement).

Gemäß der Weiterbildung der Erfindung nach Anspruch 11 ist es von Vorteil, wenn nach dem Kanalwechsel eine Testnachricht mit Aufforderung zur Bestätigung gesendet wird.

Gemäß der Weiterbildung der Erfindung nach Anspruch 14 ist es von Vorteil, wenn die Informationen nach einem vorgegebenen Übertragungsprinzip mit einer vorgegebenen Übertragungssequenz übertragen und auf dem anderen Teilsystemkanal nach einem Kanalwechsel mit einer kleinstmöglichen Übertragungssequenz übertragen werden.

Gemäß der Weiterbildung der Erfindung nach Anspruch 16 ist es von Vorteil, wenn Systemnachrichten mit Nutzinformationen und/oder den Systeminformationen und/oder die Teilsysteminformationen zwischen den Telekommunikationsschnittstellen des Telekommunikationsteilsystems auf Übertragungswegen mit unterschiedlichen Kennungen übertragen werden.

Weitere vorteilhafte Weiterbildungen der Erfindung sind in übrigen den Unteransprüchen angegeben.

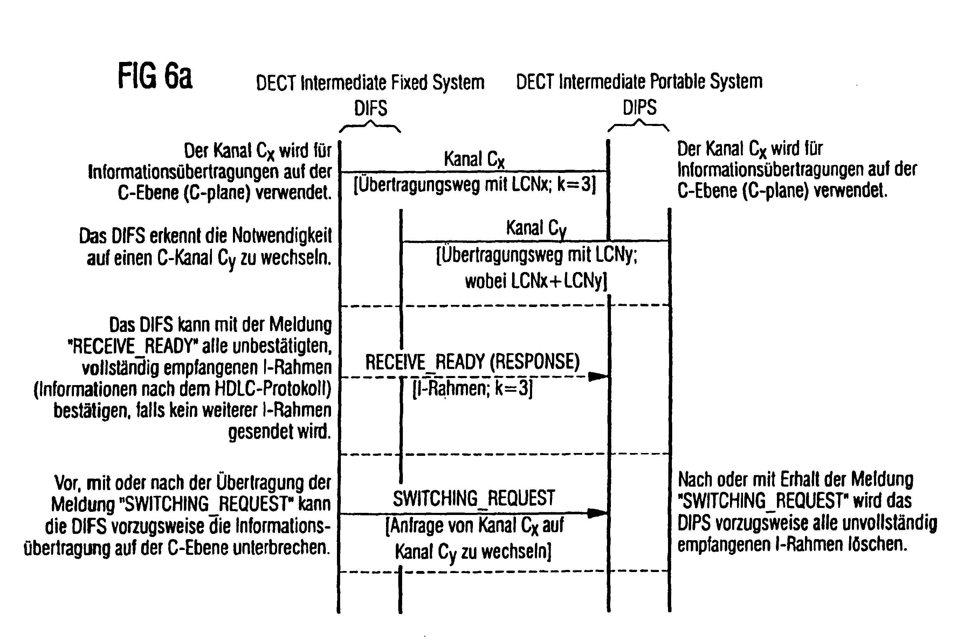

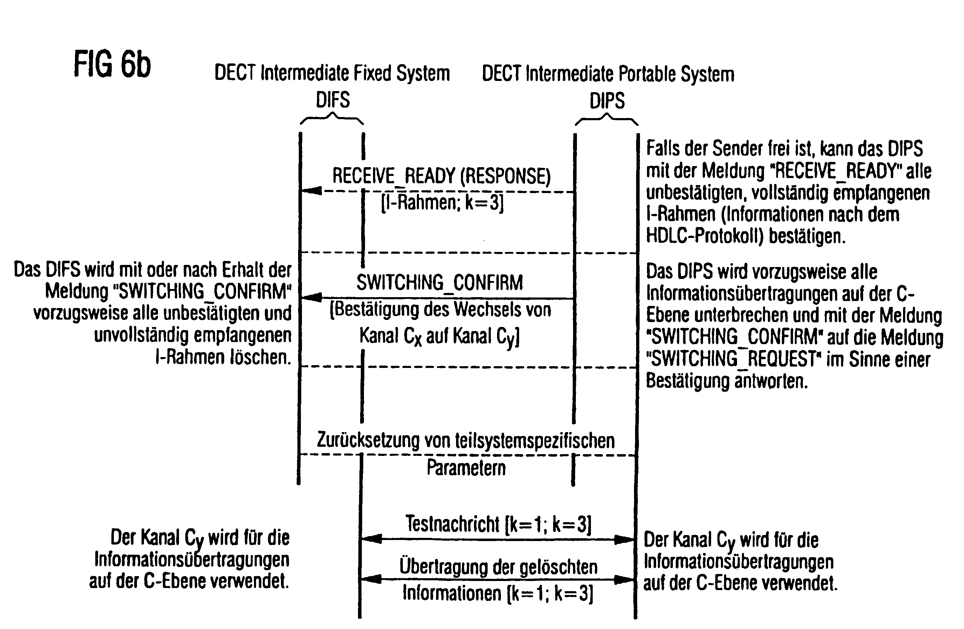

Ein erstes Ausführungsbeispiel der Erfindung wird anhand der FIGUREN 6 bis 10 erläutert.

Die FIGUREN 6 bis 10 zeigen verschiedene Anreiz-Zustands-Diagramme, die mögliche Abläufe beim des Wechsels von Telekommunikationskanälen eines in einem Telekommunikationssystem als lokale Nachrichtenübertragungsschleife eingebundenen Telekommunikationsteilsystem, insbesondere eines in einem ISDN-System eingebundenen RLL/WLL-Teilsystems RW-TTS- DIIS, darstellen.

FIGUR 6 zeigt ausgehend von den FIGUREN 1 bis 5 ein erstes Anreiz-Zustands-Diagramm, das den prinzipiellen Steuerungsablauf für einen Teilsystemkanalwechsel darstellt.

Die erste Telekommunikationsschnittstelle DIFS ist auf einem ersten Übertragungsweg mit einer ersten Übertragungswegnummer LCNx (**L**ogical **C**onnection **N**umber; Kennung) durch einen ersten Teilsystemkanal Cₓ mit der zweiten Telekommunikationsschnittstelle DIPS verbunden. Darüber hinaus besteht zwischen der ersten Telekommunikationsschnittstelle DIFS und der zweiten Tlécommunikationsschnittstelle DIPS auf einem zweite Übertragungsweg mit einer zweiten Übertragungswegnummer LCNy (Kennung) durch einen zweiten Teilsystemkanal C_{y} eine weitere Telekommunikationsverbindung oder es kann alternativ zwischen der ersten Telekommunikationsschnittstelle DIFS und der zweiten Telekommunikationsschnittstelle DIPS auf einem zweiten Übertragungsweg mit einer zweiten Übertragungswegnummer LCNy durch einen zweiten Teilsystemkanal C_{y} eine weitere Telekommunikationsverbindung aufgebaut werden.

Für die Übertragungswegnummern LCNx, LCNy gilt dabei die Beziehung LCNx ≠ LCNy. Der erste Teilsystemkanal Cₓ kann als DECT-spezifischer C_{f}-Kanal oder Cₛ-Kanal ausgebildet sein. Aufgrund der bei dem DECT-spezifischen Telekommunikationsteilsystem RW-TTS, DIIS auftretenden Kanalkonstellationen ist der zweite Teilsystemkanal C_{y} demzufolge ein Cₛ-Kanal bzw. ein C_{f}-Kanal oder Cₛ-Kanal. Nach FIGUR 6 wird der erste Teilsystemkanal Cₓ für Informationsübertragungen auf der C-Ebene (C-plane) verwendet.

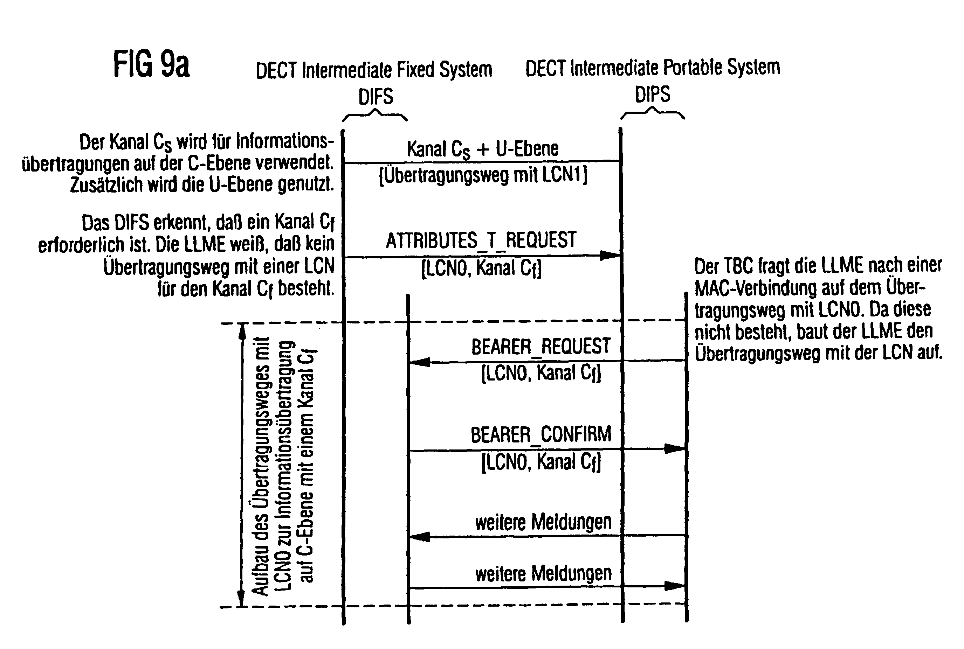

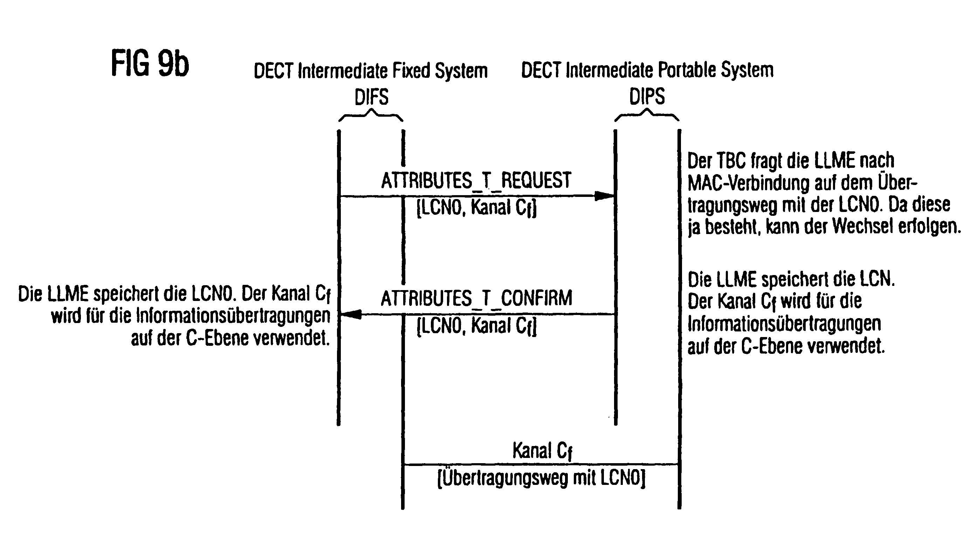

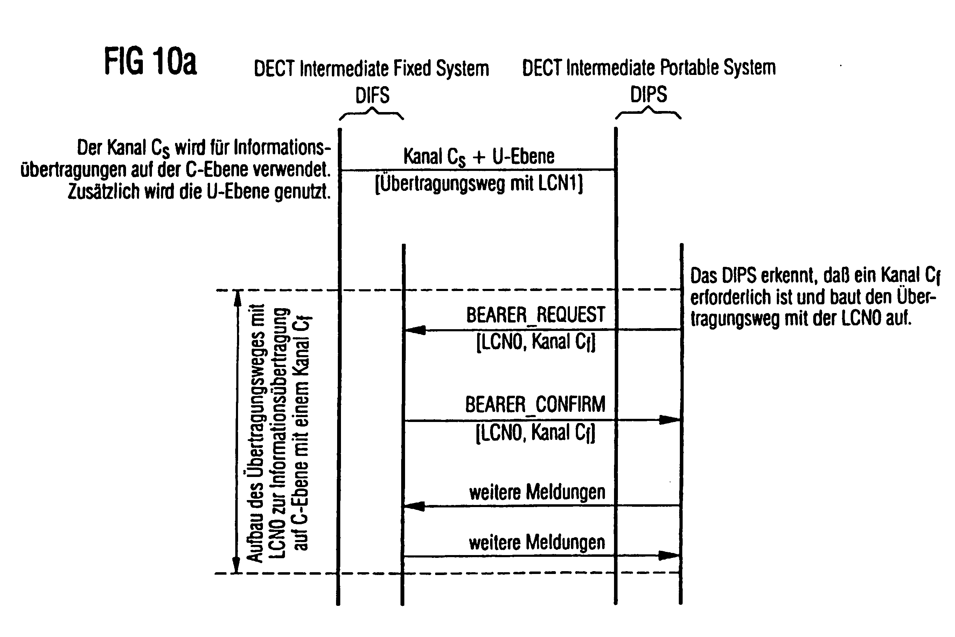

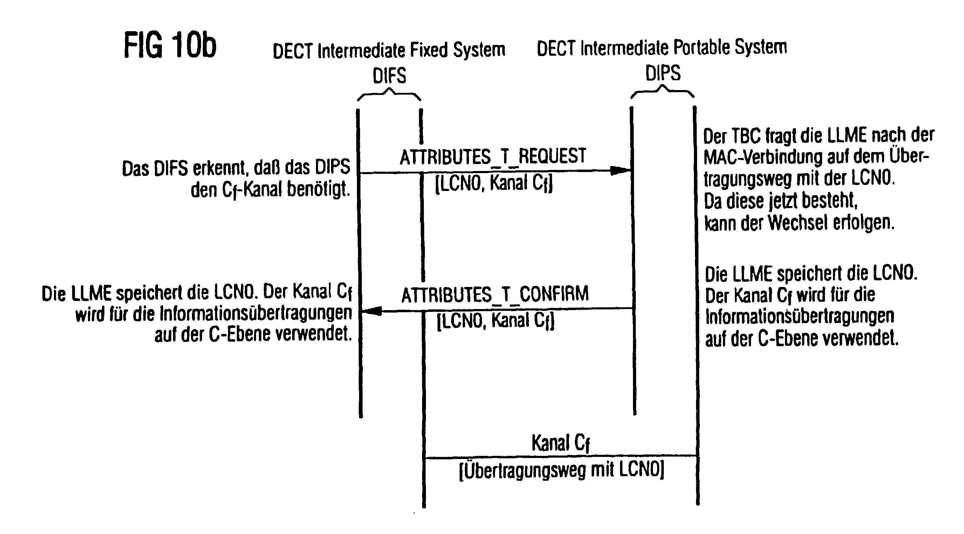

Zum Aufbau eines Übertragungsweges werden in bekannter Weise eine DECT-spezifische erste B-Feld-Meldung "BEARER_REQUEST" (vgl. ETSI-Publikation ETS 300175-3, Oktober 1992, Kap. 7.3.3.2) als Kommando (COMMAND) und eine DECT-spezifische zweite B-Feld-Meldung "BEARER_CONFIRM" (vgl. ETSI-Publikation ETS 300175-3, Oktober 1992, Kap. 7.3.3.3) als Antwort (RESPONSE) gesendet (vgl. ETSI-Publikation ETS 300175-3, Oktober 1992, Kap. 10.5.1.1 bis 10.5.1.3). Das Senden der ersten B-Feld-Meldung "BEARTER_REQUEST" wird dabei vorzugsweise von der zweiten Telekommunikationsschnittstelle DIPS initiiert (vgl. FIGUREN 9 und 10 und ETSI-Publikation ETS 300175-3, Oktober 1992, Kap. 10.5.1.2 und 10.5.1.3) .

Durch eine Analyse der ISDN-"Schicht 2"-/"Schicht 3"-Nachrichten bzw. der hierüber übertragenen Nachrichtenmenge (vgl. Druckschrift "Nachrichtentechnik Elektronik, Berlin 41, **T**2: (1991) Heft 4, Seiten 138 bis 143;") auf der Übertragungsstrecke "ISDN-Netz <--> ISDN-Teilnehmer (Terminal Endpoint TE)" erkennt z.B. die erste Telekommunikationsschnittstelle DIFS die Notwendigkeit, einen Kanalwechsel (Wechsel von dem ersten Teilsystemkanal Cₓ auf den zweiten Teilsystemkanal C_{y}) herbeizuführen. Das Ergebnis der Analyse bildet dabei den Stimulus für den Kanalwechsel.

Ein mögliches erstes Ergebnis dieser Analyse kann beispielsweise darin bestehen, dass auf dem ersten Teilsystemkanal Cₓ vorzugsweise für eine vorgegebene Zeitdauer keine Nachrichten zwischen der ersten Telekommunikationsschnittstelle DIFS und der zweiten Telekommunikationsschnittstelle DIPS übertragen werden.

Ein mögliches zweites Ergebnis dieser Analyse kann beispielsweise darin bestehen, dass zwei Übertragungswege mit jeweils einer C-Ebene und einer U-Ebene aufgebaut sind und der Übertragungsweg auf dem die C-Ebene genutzt wird abgebaut werden soll; so dass demzufolge ein Wechsel von dem abzubauenden, bisher aktiven Cₛ-Kanal zum bisher inaktiven Cₛ-Kanal notwendig wird.

Zur Minimierung des Aufwands ist es zweckmäßig, die vorstehend beschriebene Analyse in eine der Telekommunikationsschnittstellen DIFS, DIPS - z. B. in vorteilhafter Weise der ersten Telekommunikationsschnittstelle DIFS - zu konzentrieren und daraus die zweite Telekommunikationsschnittstelle DIPS zu steuern [MASTER-SLAVE -Konfiguration, bei der die erste Telekommunikationsschnittstelle DIFS der MASTER und die zweite Telekommunikationsschnittstelle DIPS der SLAVE ist]. Die erste Telekommunikationsschnittstelle DIFS hat in dieser Konstellation immer die Möglichkeit, eine dem ISDN-Dienst entsprechende DECT-Kanalstruktur auszuwählen (C-Ebene und/oder U-Ebene).

Anstelle der ersten Telekommunikationsschnittstelle DIFS ist es auch möglich, die zweite Telekommunikationsschnittstelle DIPS hierfür vorzusehen. Dies geht aber nur dann, wenn diese einen direkten Zugriff zur ISDN-"Schicht 3" besitzt. Alleine aus der ISDN-"Schicht 2"-Funktion kann die zweite Telekommunikationsschnittstelle DIPS nicht in allen Situationen eine TE-individuelle Verbindung mit C-Ebene und U-Ebene eindeutig auf eine entsprechende DECT-Kanalstruktur abbilden.

In der weiteren Erläuterung des Ausführungsbeispieles wird die vorstehend beschriebene MASTER-SLAVE-Konfiguration zugrunde gelegt.

Mit einer als Antwort (RESPONSE) gesendeten DECT-spezifischen ersten DLC-Meldung "RECEIVE_READY" (vgl. ETSI-Publikation ETS 300175-4, Oktober 1992, Kap. 7.11.2) wird die erste Telekommunikationsschnittstelle DIFS vorzugsweise - nachdem sie die Notwendigkeit eines Kanalwechsels erkannt hat - alle unbestätigten (unbeantworteten), auf dem ersten Teilsystemkanal Cₓ nach dem HDLC-Protokoll (**H**igh level **D**ata **L**ink **C**ontrol) übertragenen und vollständig empfangenen Informationen, die sogenannten I-Rahmen (Informationspaket), bestätigen (beantworten), falls kein weiterer I-Rahmen gesendet wird.

Nach dem HDLC-Protokoll ist es z.B. möglich, die Informationen (I-Rahmen) in Übertragungssequenzen (Fenstern) zu übertragen und jede Übertragungssequenz (jedes Fenster) separat zu quittieren. Im vorliegenden Fall werden die Informationen beispielsweise mit einer Fenstergröße von k = 3 übertragen, bevor quittiert wird. Die Fenstergröße k = 3 bedeutet dabei bezüglich der vorstehend erwähnten I-Rahmen, dass nach jedem dritten I-Rahmen eine Quittierung der zuvor übertragenen drei Rahmen stattfindet. Für die Fenstergröße k gilt allgemein folgende Beziehung:

1 ≤ k ≤ n mit n ∈ N

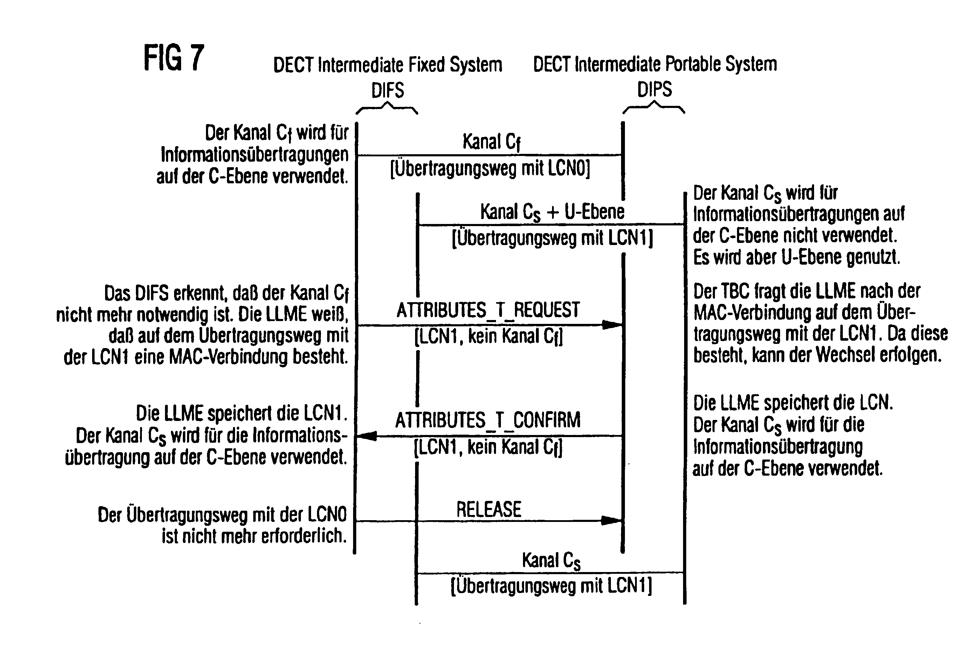

Durch die Übertragung einer ersten Meldung "SWITCHING_REQUEST"., die z.B. entweder im DECT-Standard definiert sein kann (vgl. MAC-Meldung ATTRIBUTES_T._REQUEST" in FIGUREN 7 bis 10 gemäß ETSI-Publikation ETS 300175-3, Oktober 1992, Kap. 7.2.5.3.8) oder in diesem noch zu definieren ist, wird der Wunsch der ersten Telekommunikationsschnittstelle DIFS, die Übertragung der Systeminformationen von dem ersten Teilsystemkanal Cₓ auf den zweiten Teilsystemkanal C_{y} zu verlagern, der zweiten Telekommunikationsschnittstelle DIPS übermittelt. Der Wunsch kann dabei - wie vorstehend erwähnt - durch Stimulation oder ohne jeglichen Anstoß entstanden sein.

Aufgrund der Übertragung dieser Meldung kann die erste Telekommunikationsschnittstelle DIFS entweder - vorzugsweise - die eigene Informationsübertragung auf der C-Ebene unterbrechen oder mit der Übertragung der Informationen auf der C-Ebene fortfahren. Unterbrechung bedeutet dabei, dass die erste Telekommunikationsschnittstelle DIFS für eine vorgegebene Zeitdauer keine weiteren Informationen mehr senden wird. Die Unterbrechung kann beispielsweise vor, mit oder nach der Übertragung der Meldung erfolgen.

Darüber hinaus kann die Meldung an den I-Rahmengrenzen und innerhalb eines I-Rahmens gesendet werden.

Die zweite Telekommunikationsschnittstelle DIPS wird mit oder nach Erhalt der Meldung "SWITCHING_REQUEST" vorzugsweise alle unvollständig empfangenen I-Rahmen löschen und sie kann mit oder nach Erhalt der Meldung "SWITCHING_REQUEST" die eigene Informationsübertragung auf der C-Ebene, wie die erste Telekommunikationsschnittstelle DIFS, entweder unterbrechen oder fortfahren.

Darüber hinaus kann die zweite Telekommunikationsschnittstelle DIPS, für den Fall das der eigene Sender frei ist, mit der als Antwort (RESPONSE) gesendeten DECT-spezifischen ersten DLC-Meldung "RECEIVE_READY" (vgl. ETSI-Publikation ETS 300175-4, Oktober 1992, Kap. 7.11.2) alle unbestätigten (unbeantworteten), auf dem ersten Teilsystemkanal Cₓ nach dem HDLC-Protokoll (**H**igh level **D**ata **L**ink **C**ontrol) übertragenen und vollständig empfangenen Informationen, die sogenannten I-Rahmen, bestätigen (beantworten).

Alternativ zu der unmittelbaren Unterbrechung ist es auch möglich, dass die zweite Telekommunikationsschnittstelle DIPS vor der Unterbrechung die Übertragung eines I-Rahmens abschließt.

Die Unterbrechung der Informationsübertragung oder das Fortfahren der Informationsübertragung auf dem ersten Teilsystemkanal Cₓ durch die zweite Telekommunikationsschnittstelle DIPS erfolgt vorzugsweise zwischen dem Empfang der ersten Meldung und vor der Übertragung einer zweiten Meldung "SWITCHING_CONFIRM", die z.B. wieder entweder im DECT-Standard definiert sein kann (vgl. MAC-Meldung "ATTRIBUTES_T._CONFIRM" in FIGUREN 7 bis 10 gemäß ETSI-Publikation ETS 300175-3, Oktober 1992, Kap. 7.2.5.3.8) oder in diesem noch zu definieren ist.

Durch die zweite Meldung "SWITCHING_CONFIRM" wird beispielsweise dem Wunsch der ersten Telekommunikationsschnittstelle DIFS nach einem Wechsel des Teilsystemkanals entsprochen, indem diese bestätigt (positiv beantwortet) wird.

Es ist aber auch möglich, dass die zweite Telekommunikationsschnittstelle DIPS dem Wunsch bewusst oder unbewusst (z.B. dadurch, dass sie die erste Meldung aufgrund einer Störung auf der Funkübertragungsstrecke nicht empfangen hat) nicht entspricht.

So wird für den Fall, dass dem Wunsch bewusst nicht entsprochen wird, die erste Meldung "SWITCHING_REQUEST" entweder unmittelbar oder mittelbar, z.B. dadurch, dass eine vorgegebene Zeitdauer für die Bestätigung der ersten Meldung überschritten wird, von der zweiten Telekommunikationsschnittstelle DIPS abgelehnt (negativ beantwortet).

Anderenfalls wird die erste Meldung "SWITCHING_REQUEST" mittelbar, z.B. dadurch, dass eine vorgegebene Zeitdauer für die Bestätigung der ersten Meldung überschritten wird, abgelehnt (negativ beantwortet).

In beiden vorstehend genannten Fällen wird entweder die erste Meldung "SWITCHING_REQUEST" von der ersten Telekommunikationsschnittstelle DIFS für eine vorgegebene Anzahl nochmals übertragen oder der Kanalwechsel für unbestimmte Zeit abgebrochen.

Aufgrund der Übertragung der zweiten Meldung "SWITCHING_CONFIRM" wird die Informationsübertragung auf dem zweiten Teilsystemkanal C_{y} fortgesetzt. Die Fortsetzung kann dabei vorzugsweise mit oder nach dem Übertragen der Meldung erfolgen.

Nach oder mit Erhalt der zweiten Meldung "SWITCHING_CONFIRM" wird die erste Telekommunikationsschnittstelle DIFS vorzugsweise die unbestätigten, auf dem ersten Teilsystemkanal Cₓ übertragenen und unvollständig empfangenen Informationen ebenfalls löschen.

Bevor auf dem zweiten Teilsystemkanal C_{y} die von der ersten Telekommunikationsschnittstelle DIFS und der zweiten Telekommunikationsschnittstelle DIPS gelöschten Informationen erneut übertragen werden, werden teilsystemspezifische Parameter, wie z.B. der bezüglich der DLC-Schicht spezifische Rückübertragungszähler bzw. -zeitgeber (vgl. ETSI-Publikation ETS 300175-4, Oktober 1992, Kap. 9.2.5.7) sowie die C_{T}-Paket-nummer (vgl. ETSI-Publikation ETS 300175-3, Oktober 1992, Kap. 7.1.2) zurückgesetzt.

Darüber hinaus kann auf dem zweiten Teilsystemkanal C_{y}, bevor die von der ersten Telekommunikationsschnittstelle DIFS und der zweiten Telekommunikationsschnittstelle DIPS gelöschten Informationen erneut übertragen werden, eine Testnachricht übertragen werden, die bestätigt werden muss. Die Testnachricht ist dabei vorzugsweise die als Kommando (COMMAND) gesendete erste DLC-Meldung "RECEIVE_READY" (vgl. ETSI-Publikation ETS 300175-4, Oktober 1992, Kap. 7.11.2), während die Bestätigung der Testnachricht vorzugsweise die als Antwort (RESPONSE) gesendete erste DLC-Meldung "RECEIVE_READY" (vgl. ETSI-Publikation ETS 300175-4, Oktober 1992, Kap. 7.11.2) ist.

Sowohl die Testnachricht als auch die gelöschten Informationen werden vorzugsweise, um eine schnelle Synchronisation auf dem zweiten Teilsystemkanal C_{y} zu erreichen, zu Beginn (Anfangsphase der Übertragung) mit der kleinstmöglichen Fenstergröße gemäß dem HDLC-Protokoll, das ist k =1, übertragen und anschließend wieder mit der Fenstergröße k = 3 übertragen.

FIGUR 7 zeigt ausgehend von FIGUR 6 ein zweites Anreiz-Zustands-Diagramm, das den Steuerungsablauf für den Wechsel von einem ersten Teilsystemkanal C_{f} zu einem zweiten Teilsystemkanal Cₛ darstellt.

Der erste Teilsystemkanal C_{f} wird für die Informationsübertragung auf der C-Ebene verwendet. Der zweite Teilsystemkanal Cₛ wird für die Informationsübertragung auf der C-Ebene nicht verwendet. Es wird aber die U-Ebene genutzt. Der erste Teilsystemkanal C_{f} besitzt eine größere Übertragungskapazität als der zweite Teilsystemkanal Cₛ.

Die erste Telekommunikationsschnittstelle DIFS erkennt, dass der erste Teilsystemkanal C_{f} nicht mehr notwendig ist und sendet eine erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS.

Die zweite Telekommunikationsschnittstelle DIPS bestätigt die erste MAC-Meldung "ATTRIBUTES_T._REQUEST", indem sie eine zweite MAC-Meldung "ATTRIBUTES_T._CONFIRM" zur ersten Telekommunikationsschnittstelle DIFS sendet. Danach wird der zweite Teilsystemkanal Cₛ für die Informationsübertragung auf der C-Ebene verwendet und der erste Teilsystemkanal C_{f} durch das Übertragen einer dritten MAC-Meldung "RELEASE" (vgl. ETSI-Publikation ETS 300175-3, Oktober 1992, Kap. 7.2.5.3.13) aufgelöst.

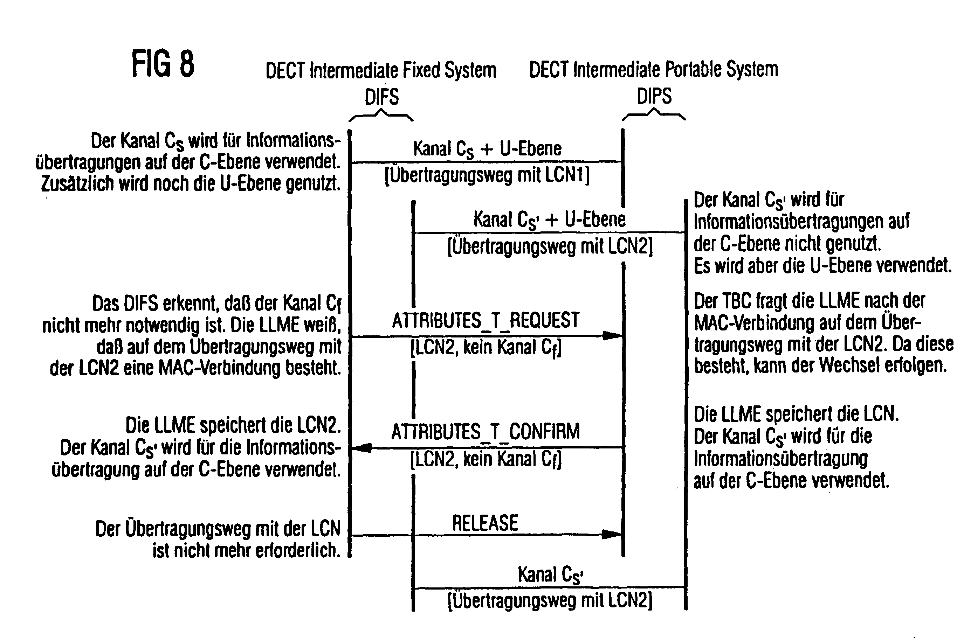

FIGUR 8 zeigt ausgehend von FIGUR 6 ein drittes Anreiz-Zustands-Diagramm, das den Steuerungsablauf für den Wechsel von dem zweiten Teilsystemkanal Cₛ zu einem dritten Teilsystemkanal C_{s'} darstellt.

Der zweite Teilsystemkanal Cₛ wird für die Informationsübertragung auf der C-Ebene verwendet. Darüber hinaus wird die U-Ebene genutzt. Der dritte Teilsystemkanal C_{s'} wird für die Informationsübertragung auf der C-Ebene nicht verwendet. Es wird aber die U-Ebene genutzt. Der zweite Teilsystemkanal Cₛ besitzt die gleiche Übertragungskapazität wie der dritte Teilsystemkanal C_{s'}.

Die erste Telekommunikationsschnittstelle DIFS erkennt, dass der zweite Teilsystemkanal Cₛ nicht mehr notwendig ist und sendet die erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS.

Die zweite Telekommunikationsschnittstelle DIPS bestätigt die erste MAC-Meldung "ATTRIBUTES_T._REQUEST", indem sie die zweite MAC-Meldung "ATTRIBUTES_T._CONFIRM" zur ersten Telekommunikationsschnittstelle DIFS sendet. Danach wird der dritte Teilsystemkanal C_{s'} für die Informationsübertragung auf der C-Ebene verwendet und der zweite Teilsystemkanal Cₛ durch das Übertragen der dritten MAC-Meldung "RELEASE" (vgl. ETSI-Publikation ETS 300175-3, Oktober 1992, Kap. 7.2.5.3.13) aufgelöst.

FIGUR 9 zeigt ausgehend von FIGUR 6 ein viertes Anreiz-Zustands-Diagramm, das den Steuerungsablauf für den Wechsel von dem zweiten Teilsystemkanal Cₛ zu dem ersten Teilsystemkanal C_{f} darstellt, wobei die Vorbereitung des Wechsels von der ersten Telekommunikationsschnittstelle DIFS initiiert wird.

Der zweite Teilsystemkanal Cₛ wird für die Informationsübertragung auf der C-Ebene verwendet. Darüber hinaus wird die U-Ebene genutzt. Ein Übertragungsweg mit einer Übertragungswegnummer LCN (Kennung) zur Nutzung des ersten Teilsystemkanal C_{f} ist noch nicht aufgebaut. Der zweite Teilsystemkanal Cₛ hat eine kleinere Übertragungskapazität als der erste Teilsystemkanal C_{f}.

Die erste Telekommunikationsschnittstelle DIFS erkennt, dass der erste Teilsystemkanal C_{f} notwendig ist. Da aber noch kein Übertragungsweg mit der Kennung LCN für den ersten Teilsystemkanal C_{f} besteht, sendet die erste Telekommunikationsschnittstelle DIFS der zweiten Telekommunikationsschnittstelle DIPS die erste MAC-Meldung "ATTRIBUTES_T._REQUEST" (vgl. ETSI-Publikation ETS 300175-3, Oktober 1992, Kap. 7.2.5.3.8). Mit dieser Meldung teilt sie der zweiten Telekommunikationsschnittstelle DIPS mit, dass ein Übertragungsweg mit der Kennung LCN, z.B. der Kennung LCN0, für den ersten Teilsystemkanal C_{f} benötigt wird.

Die Wahl der Kennung LCN - im vorliegenden Fall der LCN0 - als Kennung für den aufzubauenden Übertragungsweg erfolgt nicht willkürlich, sondern gezielt nach einem vorgegebenen Auswahlkriterium. Dieses Kriterium besteht ganz allgemein formuliert darin, dass als Kennung LCN die Kennung der möglichen Kennungen LCN0, LCN1, LCN2 herangezogen wird, die noch nicht für einen anderen Übertragungsweg benutzt wird, also frei ist.

Alternativ zu dem vorstehend genannten Auswahlkriterium ist es auch möglich, spezielle Ausprägungen des Auswahlkriteriums für die Kennungsvergabe heranzuziehen. So kann z.B. - wie im vorliegenden Fall - immer die kleinste freie Kennung der Kennungen LCN0, LCN1, LCN2 oder die größte freie Kennung der Kennungen LCN0, LCN1, LCN2 herangezogen werden.

Die zweite Telekommunikationsschnittstelle DIPS, die gemäß den Ausführungen bei der Beschreibung der FIGUR 6 vorzugsweise für den Aufbau eines Übertragungsweges verantwortlich ist (vgl. ETSI-Publikation ETS 300175-3, Oktober 1992, Kap. 10.5.1.2 und 10.5.1.3), sendet die DECT-spezifische erste B-Feld-Meldung "BEARER_REQUEST" (vgl. ETSI-Publikation ETS 300175-3, Oktober 1992, Kap. 7.3.3.2) als Kommando (COMMAND) an die erste Telekommunikationsschnittstelle DIFS. Die erste Telekommunikationsschnittstelle DIFS sendet daraufhin nach Erhalt der ersten B-Feld-Meldung die DECT-spezifische zweite B-Feld-Meldung "BEARER_CONFIRM" (vgl. ETSI-Publikation ETS 300175-3, Oktober 1992, Kap. 7.3.3.3) als Antwort (RESPONSE) zu der zweiten Telekommunikationsschnittstelle DIPS. In diesem Zustand, also nach Erhalt der zweiten B-Feld-Meldung durch die zweite Telekommunikationsschnittstelle DIPS, ist der weitere Übertragungsweg hergestellt (vgl. ETSI-Publikation ETS 300175-3, Oktober 1992, Kap. 10.5.1.1 bis 10.5.1.3).

Die erste Telekommunikationsschnittstelle DIFS sendet danach die erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS.

Die zweite Telekommunikationsschnittstelle DIPS bestätigt die erste MAC-Meldung "ATTRIBUTES_T._REQUEST", indem sie die zweite MAC-Meldung "ATTRIBUTES_T._CONFIRM" zur ersten Telekommunikationsschnittstelle DIFS sendet. Danach wird der erste Teilsystemkanal C_{f} für die Informationsübertragung auf der C-Ebene verwendet.

FIGUR 10 zeigt ausgehend von FIGUR 6 ein fünftes Anreiz-Zustands-Diagramm, das den Steuerungsablauf für den Wechsel von dem zweiten Teilsystemkanal Cₛ zu dem ersten Teilsystemkanal C_{f} darstellt, wobei die Vorbereitung des Wechsels von der zweiten Telekommunikationsschnittstelle DIPS initiiert wird.

Der zweite Teilsystemkanal Cₛ wird für die Informationsübertragung auf der C-Ebene verwendet. Darüber hinaus wird die U-Ebene genutzt. Ein Übertragungsweg mit einer Übertragungswegnummer LCN (Kennung) zur Nutzung des ersten Teilsystemkanal C_{f} ist noch nicht aufgebaut. Der zweite Teilsystemkanal Cₛ hat eine kleinere Übertragungskapazität als der erste Teilsystemkanal C_{f}.

Die zweite Telekommunikationsschnittstelle DIFS erkennt, dass der erste Teilsystemkanal C_{f} notwendig ist. Da aber noch kein Übertragungsweg mit der Kennung LCN, z.B. der Kennung LCN0, für den ersten Teilsystemkanal C_{f} besteht, wird dieser von ihr aufgebaut.

Die Wahl der Kennung LCN - im vorliegenden Fall der LCN0 - als Kennung für den aufzubauenden Übertragungsweg erfolgt nicht willkürlich, sondern wiederum gezielt nach einem vorgegebenen Auswahlkriterium. Dieses Kriterium besteht ganz allgemein formuliert darin, dass als Kennung LCN die Kennung der möglichen Kennungen LCN0, LCN1, LCN2 herangezogen wird, die noch nicht für einen anderen Übertragungsweg benutzt wird, also frei ist.

Alternativ zu dem vorstehend genannten Auswahlkriterium ist es auch möglich, spezielle Ausprägungen des Auswahlkriteriums für die Kennungsvergabe heranzuziehen. So kann z.B. - wie im vorliegenden Fall - immer die kleinste freie Kennung der Kennungen LCN0, LCN1, LCN2 oder die größte freie Kennung der Kennungen LCN0, LCN1, LCN2 herangezogen werden.

Für den Aufbau des Übertragungsweges sendet die zweite Telekommunikationsschnittstelle DIPS, die gemäß den Ausführungen bei der Beschreibung der FIGUR 6 vorzugsweise für den Aufbau eines Übertragungsweges verantwortlich ist (vgl. ETSI-Publikation ETS 300175-3, Oktober 1992, Kap. 10.5.1.2 und 10.5.1.3), der ersten Telekommunikationsschnittstelle DIFS die DECT-spezifische erste B-Feld-Meldung "BEARER_REQUEST" (vgl. ETSI-Publikation ETS 300175-3, Oktober 1992, Kap. 7.3.3.2) als Kommando (COMMAND).

Die erste Telekommunikationsschnittstelle DIFS sendet daraufhin nach Erhalt der ersten B-Feld-Meldung die DECT-spezifische zweite B-Feld-Meldung "BEARER_CONFIRM" (vgl. ETSI-Publikation ETS 300175-3, Oktober 1992, Kap. 7.3.3.3) als Antwort (RESPONSE) zu der zweiten Telekommunikationsschnittstelle DIPS. In diesem Zustand, also nach Erhalt der zweiten B-Feld-Meldung durch die zweite Telekommunikationsschnittstelle DIPS, ist der weitere Übertragungsweg hergestellt (vgl. ETSI-Publikation ETS 300175-3, Oktober 1992, Kap. 10.5.1.1 bis 10.5.1.3).

Dies von der ersten Telekommunikationsschnittstelle DIFS erkannt, sodass diese die erste MAC-Meldung "ATTRIBUTES_T._REQUEST" (vgl. ETSI-Publikation ETS 300175-3, Oktober 1992, Kap. 7.2.5.3.8) zur zweiten Telekommunikationsschnittstelle DIPS sendet.

Die zweite Telekommunikationsschnittstelle DIPS bestätigt die erste MAC-Meldung "ATTRIBUTES_T._REQUEST", indem sie die zweite MAC-Meldung "ATTRIBUTES_T._CONFIRM" zur ersten Telekommunikationsschnittstelle DIFS sendet. Danach wird der erste Teilsystemkanal C_{f} für die Informationsübertragung auf der C-Ebene verwendet.

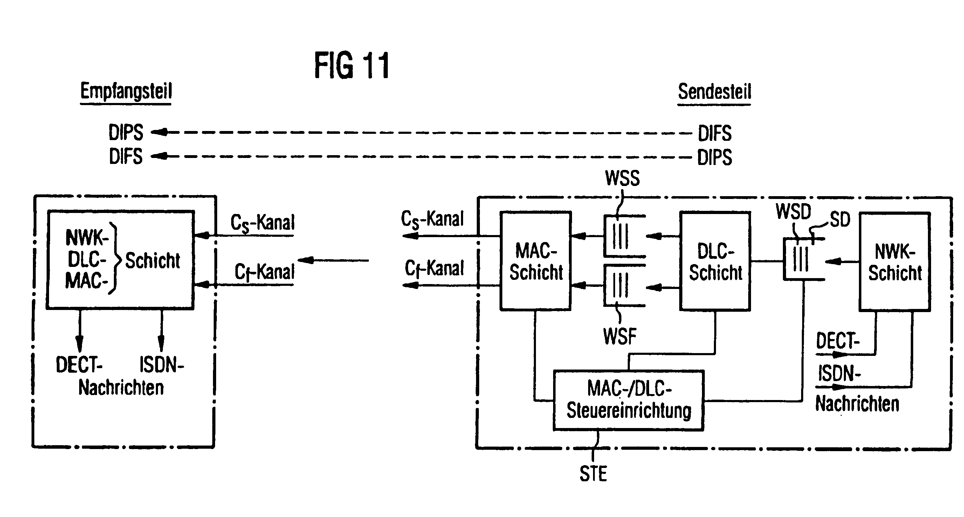

Ein zweites Ausführungsbeispiel der Erfindung wird anhand der FIGUREN 11 bis 15 erläutert.

FIGUR 11 zeigt ausgehend von den FIGUREN 1 bis 5 den prinzipiellen Aufbau eines Sendeteils und Empfangsteils jeweils für die erste Telekommunikationsschnittstelle DIFS und die zweite Telekommunikationsschnittstelle DIPS, der für die Analyse der ISDN-"Schicht 2"-/"Schicht 3"-Nachrichten bzw. der hierüber übertragenen Nachrichtenmenge (vgl. Druckschrift "Nachrichtentechnik Elektronik, Berlin 41, **T**2: (1991) Heft 4, Seiten 138 bis 143;") auf der Übertragungsstrecke "ISDN-Netz <--> ISDN-Teilnehmer (Terminal Endpoint TE)" von Bedeutung ist. Durch das Sendeteil und/oder das Empfangsteil erkennen/erkennt z.B. die erste Telekommunikationsschnittstelle DIFS und/oder die zweite Telekommunikationsschnittstelle DIPS die Notwendigkeit, einen Kanalwechsel (Wechsel von einem Teilsystemkanal auf einen anderen Teilsystemkanal) herbeizuführen. Das Ergebnis der Analyse bildet dabei den Stimulus für den Kanalwechsel. Der in FIGUR 11 dargestellte Aufbau des Sendeteils und Empfangsteils kann im Zusammenhang mit der Stimulation des Kanalwechsels auch für das erste Ausführungsbeispiel der Erfindung verwendet werden.

In dem Sendeteil der ersten Telekommunikationsschnittstelle DIFS bzw. der zweiten Telekommunikationsschnittstelle DIPS übergibt die NWK-Schicht (**N**et**W**or**K**layer) in bekannter Weise ISDN-"Schicht 2"/"Schicht 3"-Informationen und DECT-Steuerinformationen über eine als Speicher ausgebildeten erste Warteschlange WSD an die DLC-Schicht (**D**ata **L**ink **C**ontrol). Eine MAC-/DLC-Steuereinrichtung STE des Sendeteils misst den Füllgrad in der Warteschlange WSD und stimuliert daraus die MAC-Schicht (**M**edium **A**ccess **C**ontrol) und DLC-Schicht. Solange der Füllgrad unter einer Schwelle SD bleibt, legt die DLC-Schicht die zu übertragende Information (Nachricht) in eine ebenfalls als Speicher ausgebildete zweite Warteschlange WSS ab, aus der sie die MAC-Schicht auf dem Cₛ-Kanal an das Empfangsteil überträgt.

Wenn die Schwelle SD überschritten wird, legt die DLC-Schicht die Information in eine wiederum als Speicher ausgebildete dritte Warteschlange WSF ab, aus der sie die MAC-Schicht auf einem C_{f}-Kanal, der hierfür aufgebaut wird, an das Empfangsteil überträgt. Der Cₛ-Kanal wird wieder verwendet, wenn die erste Warteschlange WSD und die dritte Warteschlange WSF leer sind.

Für die sich hieraus ergebenden Kanalwechsel zwischen dem Cₛ₋Kanal und dem C_{f}-Kanal wird unterstellt, dass die Zuordnung Cₛ-Kanal <--> C_{f}-Kanal in der ersten Telekommunikationsschnittstelle DIFS und der zweiten Telekommunikationsschnittstelle DIPS unter Verwendung des DECT-Standards bekannt ist. Wie der Cₛ-Kanal so kann natürlich auch der C_{f}-Kanal, sofern dieser bereits existent ist, für Übertragungen in der Gegenrichtung benutzt werden.

### Funktion im Einzelnen

Solange der Füllgrad der ersten Warteschlange WSD unter der Schwelle SD liegt, verwendet die DLC-Schicht zur Speisung der zweiten Warteschlange WSS das DECT-A-Feld-Format (DECT-Standard). Nach der Überschreitung der Schwelle SD weird die dritte Warteschlange WSF im DECT-B-Feld-Format gespeist. Die Umschaltung zum Senden aus der dritten Warteschlange WSF erfolgt nach Aufbau des C_{f}-Kanal, wenn die zweite Warteschlange WSS leer ist oder der C_{f}-Kanal bereit ist.

### Für den Übergang vom A-Format auf das B-Format gibt es zwei Möglichkeiten:

### a) Warteschlange WSS erhält nur komplette A-Feld-DLC-Rahmen:

Die Umschaltung erfolgt dann immer an DLC-Rahmengrenzen. Für die Dimensionierung der DLC-Rahmen gibt es drei Kriterien:
- möglichst kurze Rahmen, damit die Verzögerung der Umschaltung zum Senden aus der dritten Warteschlange WSF möglichst kurz bleibt,
- andererseits steigt der DLC-PDU-Datenüberhang (Data o-verhead; **P**rotocol **D**ata **U**nit), wenn die maximale DLC-Rahmenlänge nicht ausgenutzt wird,
- Überbrückung der Aufbauzeit für den C_{f}-Kanal.

Für die Steuerung der Umschaltung Cₛ-Kanal <--> C_{f}-Kanal werden DLC-Prozeduren (Data Link Control) verwendet.

So kommen z.B. die DECT-Standardprozeduren "Class B acknowledged suspension / Class B resumption" in modifizierter Form spezifisch für diese Anwendung (vgl. DECT-Standard ETS 300175-4, Oct. 1992, Kap. 9.2.7) in Frage.

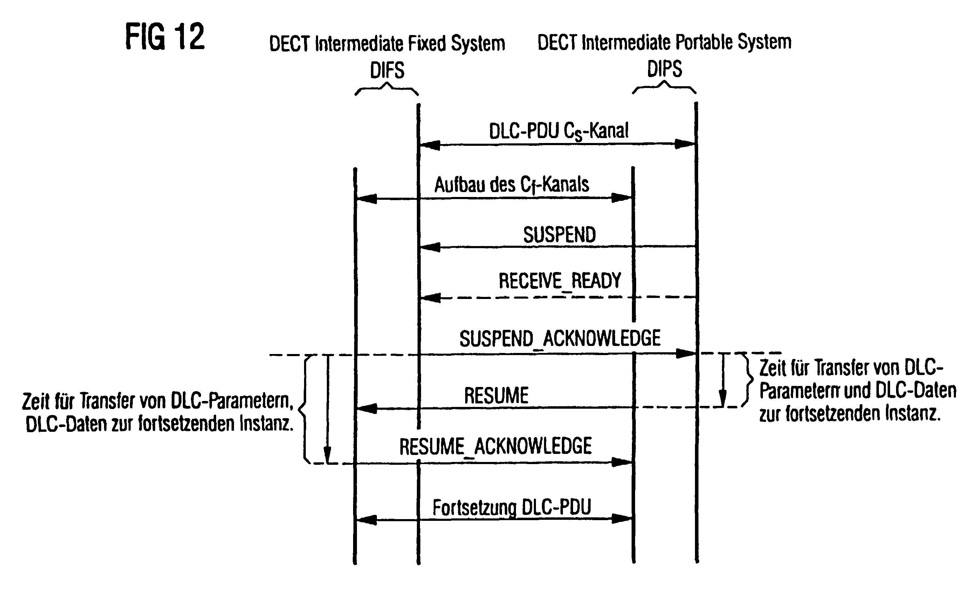

**C**_{**s**}**-Kanal** --> **C**_{**f**}**-Kanal** gemäß FIGUR 12

Wenn die erste Warteschlange WSS leer ist, d. h. der letzte I-Rahmen nach dem HDLC-Protokoll quittiert ist, sendet die initiierende Telekommunikationsschnittstelle DIFS, DIPS (z.B. die zweite Telekommunikationsschnittstelle DIPS) einen Befehl "SUSPEND" auf dem Cₛ-Kanal. Falls die Gegenstelle (die erste Telekommunikationsschnittstelle DIFS) selbst noch I-Rahmen aus der ersten Warteschlange WSS zu senden hat, beendet er dies frühestmöglichst an der nächsten Rahmengrenze (restliche Rahmen werden in die dritte Warteschlange WSF übertragen), erwartet die letzte Quittung auf dem Cₛ-Kanal und akzeptiert dann den Befehl "SUSPEND" (Suspension) auf dem Cₛ-Kanal.

Danach initiiert die zweite Telekommunikationsschnittstelle DIPS die Wiederaufnahme (Resumption) der Verbindung (data link) durch einen Befehl "RESUME" auf dem C_{f}-Kanal. Die erste Telekommunikationsschnittstelle DIFS quittiert dies auf dem C_{f}-Kanal. Dann setzen beide Telekommunikationsschnittstellen DIFS, DIPS die Übertragung auf dem C_{f}-Kanal fort.

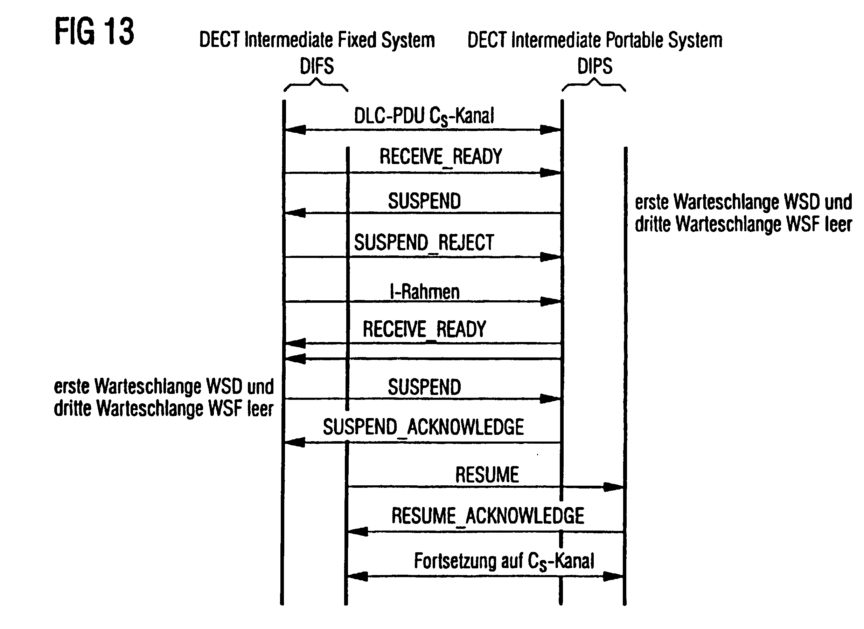

**C**_{**f**}**-Kanal --> C**_{**s**}**-Kanal** gemäß FIGUR 13

Die Rückschaltung erfolgt, wenn die erste Warteschlange WSD und die dritte Warteschlange WSF auf beiden Seiten leer sind und der letzte I-Rahmen quittiert ist.

### Unterschieden werden dabei zwei Fälle:

Die Bedingung ist zuerst bei der Telekommunikationsschnittstelle erfüllt, die die Umschaltung veranlasst hat (die zweite Telekommunikationsschnittstelle DIPS).
- die zweite Telekommunikationsschnittstelle DIPS sendet den Befehl "SUSPEND" auf dem C_{f}-Kanal.
- die erste Telekommunikationsschnittstelle DIFS weist den Befehl "SUSPEND" auf dem C_{f}-Kanal zurück und setzt das Senden von Informationen auf dem C_{f}-Kanal fort.
- die erste Telekommunikationsschnittstelle DIFS übernimmt damit in der Folge auch die Initiative zur Umschaltung auf den Cₛ-Kanal und leitet seinerseits die "Suspension/Resumption" ein, wenn der C_{f}-Kanal nicht mehr benötigt wird. In der Zwischenzeit könnte auch die zweite Telekommunikationsschnittstelle DIPS den C_{f}-Kanal bei Bedarf spontan wieder benutzen.

Die Bedingung bei der Telekommunikationsschnittstelle DIFS, DIPS, die vorher die Umschaltung auf den C_{f}-Kanal veranlasst oder beibehalten hat, wird später erfüllt.

Dieser Fall beendet die Benutzung des C_{f}-Kanals und schaltet auf den Cₛ-Kanal zurück.

Die antwortende Telekommunikationsschnittstelle DIFS, DIPS akzeptiert in diesem Fall die "Suspension" auf dem C_{f}-Kanal. Die suspendierende Telekommunikationsschnittstelle DIFS, DIPS initiiert dann die "Resumption" auf dem Cₛ-Kanal.

### b) Umschaltung innerhalb von I-Rahmen

Dieser Ansatz vermeidet den zusätzlichen Datenüberhang (O-verhead) für optimale DLC-Rahmen, setzt aber voraus, daß die Umschaltung Cₛ-Kanal <--> C_{f}-Kanal für die DLC-Schicht lückenlos ist und der exakte Umschaltpunkt auch für den Empfänger erkennbar ist.

Die DLC-Schicht im Sendeteil gibt nach Start eines Rahmens in der zweiten Warteschlange WSS eine Rahmenlänge L vor, muss aber damit rechnen, dass innerhalb des Rahmens auf die dritte Warteschlange WSF umzuschalten ist und dass der Rahmen dort im B-Feld-Format abzuschließen ist. Für diesen Fall speichert er L und alle bereits an die zweite Warteschlange WSS übergebenen Daten und kann daraus den Rahmenabschluss (Füll-Oktetts, Prüfsumme) nach B-Feld-Regeln bilden.

Zur Steuerung der für die DLC-Schicht lückenlosen Umschaltung kann eine Erweiterung der bisher standardisierten Funktionen der MAC-Schicht benutzt werden. Diese Erweiterung betrifft das A-Feld wie folgt (s. ETS 300 175-3, 7.2.5 insbesondere 7.2.5.3 ff.).
- Im MAC-Nachrichtenkopf wird eine der noch freien Codepunkte mit dem MAC-Kommandotyp "Umschaltung Cₛ-Kanal / C_{f}-Kanal" belegt.
- Der Rest des A-Feldes enthält unter diesem Kommando im Wesentlichen folgende Informationen:

- Referenz der MAC-Verbidungen, zwischen denen die Cₛ-Kanal / C_{f}-Kanal -Umschaltung erfolgen soll (verwendet wird die bereits definierte ECN; Exchanged Connection Number).
- Spezifische Umschaltkommando Cₛ-Kanal --> C_{f}-Kanal / C_{f-}Kanal --> Cₛ-Kanal.
- Quittung: Umschaltung akzeptiert/nicht akzeptiert, Bestätigung des korrekten Empfangs des Kommandos "Quittung".
- Leerfeld (Wartefunktion zu verwenden, wenn nicht unmittelbar quittiert werden kann).

Das B-Feld der Zeitschlitze mit diesen MAC-Steuerinformationen trägt entweder Benutzerinformationen (U-Ebene) falls der Cₛ-Kanal verwendet wird oder die Signalisierungsinformation selbst bzw. keine Information bei Verwendung des Cₛ₋Kanals.

Die Umschaltung im I-Rahmen läuft nach einem Schema ähnlich dem vorstehend in Punkt"a)" skizzierten ab:

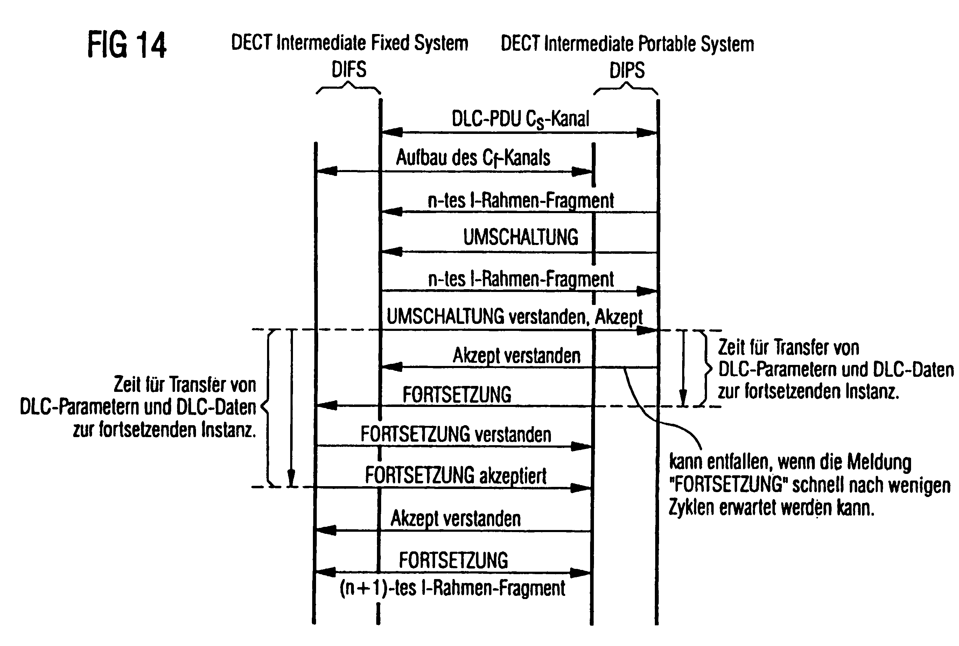

**C**_{**s**}**-Kanal** --> **C**_{**f**}**-Kanal** gemäß FIGUR 14

Die initiierende Telekommunikationsschnittstelle DIFS, DIPS sendet auf dem Cₛ-Kanal nach Aufbau der MAC-Verbindung für den C_{f}-Kanal anstelle eines I-Rahmen-Segments das Umschaltekommando Cₛ-Kanal --> C_{f}-Kanal. Die Gegenseite quittiert auf dem Cₛ-Kanal den Akzept (einen Grund zur Rückweisung gibt es in diesem Fall nicht). Dann setzen beide Telekommunikationsschnittstellen DIFS, DIPS die Übertragung auf dem C_{f}-Kanal fort.

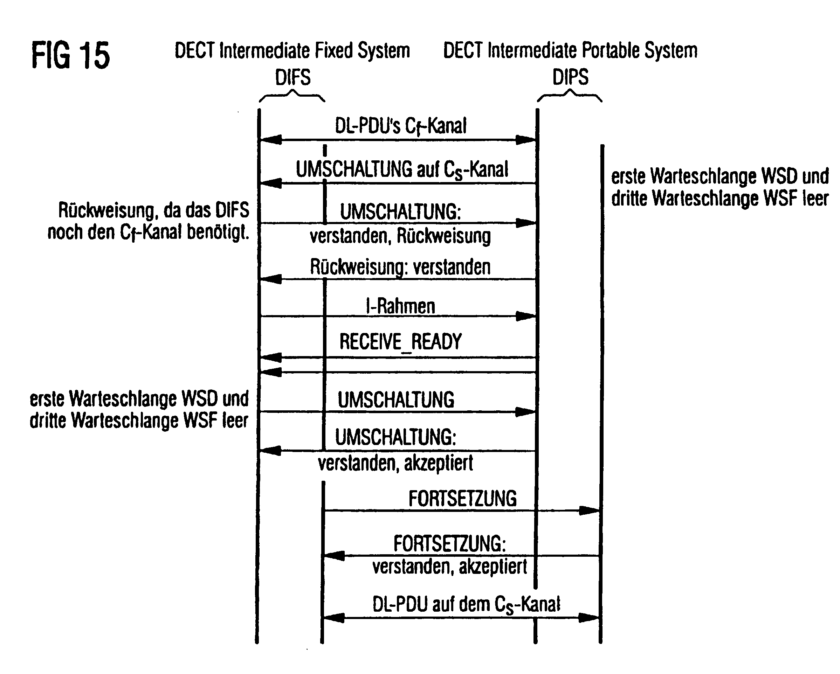

**C**_{**f**}**-Kanal --> C**_{**s**}**-Kanal** gemäß FIGUR 15

Wenn die den C_{f}-Kanal initiierende Telekommunikationsschnittstelle DIFS, DIPS diesen Kanal nicht mehr benötigt, sendet sie auf dem C_{f}-Kanal das Umschaltkommando C_{f}-Kanal --> Cₛ₋Kanal. Benötigt auch die Gegenseite diesen Kanal zu diesem Zeitpunkt nicht mehr (WSD, WSF leer), quittiert sie den Akzept der Rückschaltung. Andernfalls weist sie die Rückschaltung zurück und übernimmt damit ihrerseits die Initiative zum erneuten Anstoß der Rückschaltung, wenn sie den C_{f}-Kanal nicht mehr benötigt. Solange der C_{f}-Kanal aktiv ist, kann er auch von der Gegenseite wieder benutzt werden.

### Anmerkung

Das Verfahren kann natürlich auch an I-Frame-Grenzen verwendet werden.

Dabei gibt es zwei Möglichkeiten:
- MAC-Kommandos und Quittungen werden an DLC-Rahmengrenzen angewendet, d.h. gesendet.
- MAC-Kommandos und Quittungen werden präventiv bereits in laufende Übertragungen von DLC-Rahmen eingeblendet, der Zeitpunkt der Wirksamkeit jedoch auf DLC-Rahmenenden definiert.

Damit ergibt sich der Vorteil eines Zeitgewinns, weil Verhandlungen und ggf. Folgeoperationen bereits parallel zu einer noch laufenden Übertragung stattfinden können.

### Sonstiges

- Der C_{f}-Kanal kann nach DECT-Regeln bei Bedarf von beiden Telekommunikationsschnittstellen DIFS, DIPS aufgebaut werden. Kollisionen sollen dabei zu einem gemeinsamen Kanal führen.
- Bei Kollision zwischen Aufbau und Abbau hat der Abbau Vorrang.
- Die Verwendung des C_{f}-Kanals kann zusätzlich auch durch andere Kriterien stimuliert werden.

## Patentansprüche

1. Verfahren zur Steuerung des Wechsels von Telekommunikationskanälen eines in einem Telekommunikationssystem als lokale Nachrichtenübertragungsschleife eingebundenen Telekommunikationsteilsystems, insbesondere eines in einem ISDN-System eingebundenen DECT-spezifischen RLL/WLL-Teilsystems, wobei
a) in dem Telekommunikationssystem (I-TTS) Systeminformationen übertragen werden,
b) dem Telekommunikationsteilsystem (RW-TTS, DIIS) mehrere Teilsystemkanäle (Cₛ, C_{f}) zur Übertragung von Teilsysteminformationen und der Systeminformationen zugewiesen werden,
c) dem Telekommunikationsteilsystem (RW-TTS, DIIS) zwei Telekommunikationsschnittstellen (DIFS, DIPS) zugewiesen werden, die zumindest über einen Teilsystemkanal (Cₓ) der Teilsystemkanäle (Cₛ, C_{f}) miteinander verbunden sind,
d) das Telekommunikationsteilsystem (RW-TTS, DIIS) über die beiden Telekommunikationsschnittstellen (DIFS, DIPS) in das Telekommunikationssystem (I-TTS) eingebunden wird,
e) auf dem Teilsystemkanal (Cₓ) der Teilsystemkanäle (Cₛ, C_{f}) die Informationen übertragen werden,
**dadurch gekennzeichnet, dass**
f) ein Umschaltkommando (SWITCHING_REQUEST, ATTRIBUTE_REQUEST, SUSPEND) übertragen wird, mit dem eine der beiden Telekommunikationsschnittstellen (DIFS, DIPS) der anderen Telekommunikationsschnittstelle (DIFS, DIPS) signalisiert, dass die Informationen auf einem anderen Teilsystemkanal (C_{y}) der Teilsystemkanäle (Cₛ, C_{f}) übertragen werden sollen,
g) eine Umschaltantwort (SWITCHING_CONFIRM, ATTRIBUTE_CONFIRM, RESUME) von der das Umschaltkommando empfangenden Telekommunikationsschnittstelle (DIFS, DIPS) zu der das Umschaltkommando sendenden Telekommunikationsschnittstelle (DIFS, DIPS) übertragen wird,
h) nach der Übertragung der Umschaltantwort und vor der Übertragung der Systeminformationen auf dem anderen Teilsystemkanal (C_{y}) vorgegebene teilsystemspezifische Parameter zurückgesetzt werden.

2. Verfahren nach Anspruch 1, **dadurch gekennzeichnet, dass**
die Übertragung des Umschaltkommandos (SWITCHING_REQUEST, ATTRIBUTE_REQUEST) durch das Ergebnis aus einer Analyse der in dem Telekommunikationsteilsystem (RW-TTS, DIIS) zu übertragenden Informationen durch mindestens eine der beiden Telekommunikationsschnittstellen (DIFS, DIPS) stimuliert wird.

3. Verfahren nach Anspruch 2, **dadurch gekennzeichnet, dass**
das Ergebnis der Analyse darin besteht, dass auf dem Teilsystemkanal (Cₓ) für eine vorgegebene Zeitdauer keine Informationen zwischen den Telekommunikationsschnittstellen (DIFS, DIPS) übertragen worden sind.

4. Verfahren nach Anspruch 1, **dadurch gekennzeichnet, dass**
das Umschaltkommando (SWITCHING_REQUEST, ATTRIBUTE_REQUEST) erneut übertragen wird, wenn die Umschaltantwort (SWITCHING_CONFIRM, ATTRIBUTE_CONFIRM) nach einer vorgegebenen Zeitdauer nicht übertragen wird.

5. Verfahren nach Anspruch 4, **dadurch gekennzeichnet, dass**
das Umschaltkommando (SWITCHING_REQUEST, ATTRIBUTE_REQUEST) beim wiederholten Ausbleiben der Umschaltantwort (SWITCHING_CONFIRM, ATTRIBUTE_CONFIRM) für eine vorgegebene Anzahl weiter übertragen wird, bevor die Steuerung des Kanalwechsels für unbestimmte Zeit abgebrochen wird.

6. Verfahren nach einem der Ansprüche 1 bis 4, **dadurch gekennzeichnet, dass**
die Umschaltantwort (SWITCHING_CONFIRM, ATTRIBUTE_CONFIRM) eine Umschaltbestätigung ist, mit dem die das Umschaltkommando empfangende Telekommunikationsschnittstelle (DIFS, DIPS) der das Umschaltkommando sendenden Telekommunikationsschnittstelle (DIFS, DIPS) signalisiert, dass die Informationen auf dem anderen Teilsystemkanal (C_{y}) übertragen werden

7. Verfahren nach einem der Ansprüche 1 bis 6, **dadurch gekennzeichnet, dass**
vor, mit oder nach der Übertragung des Umschaltkommandos (SWITCHING_REQUEST, ATTRIBUTE_REQUEST) die Übertragung der Informationen unterbrochen wird und dass mit oder nach der Übertragung der Umschaltantwort (SWITCHING_CONFIRM, ATTRIBUTE_CONFIRM) die Übertragung der Informationen wieder aufgenommen wird.

8. Verfahren nach Anspruch 7, **dadurch gekennzeichnet, dass**
unmittelbar nach der Übertragung des Umschaltkommandos (SWITCHING_REQUEST, ATTRIBUTE_REQUEST) die Übertragung der Informationen unterbrochen wird und dass im wesentlichen unmittelbar nach der Übertragung des Umschaltkommandos (SWITCHING_REQUEST, ATTRIBUTE_REQUEST) die Umschaltantwort (SWITCHING_CONFIRM, ATTRIBUTE_CONFIRM) übertragen wird.

9. Verfahren nach Anspruch 7, **dadurch gekennzeichnet, dass**
unmittelbar nach der Übertragung des Umschaltkommandos (SWITCHING_REQUEST, ATTRIBUTE_REQUEST) die Übertragung der Informationen durch die das Umschaltkommando (SWITCHING_REQUEST, ATTRIBUTE_REQUEST) sendende Telekommunikationsschnittstelle (DIFS, DIPS) unterbrochen wird, dass im wesentlichen unmittelbar nach der Übertragung des Umschaltkommandos (SWITCHING_REQUEST, ATTRIBUTE_REQUEST) die Übertragung der Informationen durch die das Umschaltkommando (SWITCHING_REQUEST, ATTRIBUTE_REQUEST) empfangende Telekommunikationsschnittstelle (DIFS, DIPS) dann unterbrochen wird, wenn von dieser Telekommunikationsschnittstelle (DIFS, DIPS) ein in sich abgeschlossenes Informationspaket abschließend übertragen worden ist und dass im Wesentlichen unmittelbar nach der Übertragung des Informationspakets die Umschaltantwort (SWITCHING_CONFIRM, ATTRIBUTE_CONFIRM) übertragen wird.

10. Verfahren nach Anspruch 7, **dadurch gekennzeichnet, dass**
unmittelbar nach der Übertragung des Umschaltkommandos (SWITCHING_REQUEST, ATTRIBUTE_REQUEST) die Übertragung der Informationen durch die das Umschaltkommando (SWITCHING_REQUEST, ATTRIBUTE_REQUEST) sendende Telekommunikationsschnittstelle (DIFS, DIPS) unterbrochen wird, dass im wesentlichen unmittelbar nach der Übertragung des Umschaltkommandos (SWITCHING_REQUEST, ATTRIBUTE_REQUEST) die Übertragung der Informationen durch die das Umschaltkommando (SWITCHING_REQUEST, ATTRIBUTE_REQUEST) empfangende Telekommunikationsschnittstelle (DIFS, DIPS) nach einer vorgegebenen Zeitdauer zur Bestätigung bereits empfangener Informationen unterbrochen wird und dass im wesentlichen unmittelbar nach der Übertragung der Bestätigung die Umschaltantwort (SWITCHING_CONFIRM, ATTRIBUTE_CONFIRM) übertragen wird.

11. Verfahren nach einem der Ansprüche 1 bis 10, **dadurch gekennzeichnet, dass**
auf dem anderen Teilsystemkanal (C_{y}) nach einem Kanalwechsel eine Testnachricht mit Aufforderung zur Bestätigung gesendet wird.

12. Verfahren nach Anspruch 11, **dadurch gekennzeichnet, dass**
die Testnachricht eine RECEIVE_READY-Meldung ist, die als Kommando (COMMAND) gesendet wird und dass die Bestätigung eine RECEIVE_READY-Meldung ist, die als Antwort (RESPONSE) gesendet wird.

13. Verfahren nach einem der Ansprüche 6, 7 oder 9, **dadurch gekennzeichnet, dass**
ein durch die unmittelbare Unterbrechung unvollständig übertragenes oder unbeantwortetes Informationspaket der zu übertragenden Informationen auf dem anderen Teilsystemkanal (C_{y}) nach einem Kanalwechsel erneut übertragen wird.

14. Verfahren nach einem der Ansprüche 1 bis 13, **dadurch gekennzeichnet, dass**
die Informationen nach einem vorgegebenen Übertragungsprinzip mit einer vorgegebenen Übertragungssequenz (k =3) übertragen werden und dass die Informationen auf dem anderen Teilsystemkanal (C_{y}) nach einem Kanalwechsel mit einer kleinstmöglichen Übertragungssequenz (k =1) übertragen werden.

15. Verfahren nach Anspruch 14, **dadurch gekennzeichnet, dass**
das Übertragungsprinzip mit der vorgegebenen Übertragungssequenz das HDLC-Protokoll zur Übertragung von HDLC-Rahmen ist.

16. Verfahren nach einem der Ansprüche 1 bis 15, **dadurch gekennzeichnet, dass**
Systemnachrichten mit Nutzinformationen und/oder den Systeminformationen und/oder die Teilsysteminformationen zwischen den Telekommunikationsschnittstellen (DIFS, DIPS) des Telekommunikationsteilsystems (RW-TTS, DIIS) auf Übertragungswegen mit unterschiedlichen Kennungen (LCNx, LCNy, LCNz) übertragen werden.

17. Verfahren nach Anspruch 16, **dadurch gekennzeichnet, dass**
einem ersten Übertragungsweg, dem ein erster Teilsystemkanal (C_{f}) zugeordnet ist, eine erste Kennung zugewiesen wird, die durch andere Übertragungswege nicht belegt ist.

18. Verfahren nach Anspruch 17, **dadurch gekennzeichnet, dass**
die erste Kennung die jeweils kleinste vergebbare Kennung von den die Übertragungswege kennzeichnenden Kennungen (LCNx, LCNy, LCNz) ist.

19. Verfahren nach Anspruch 17, **dadurch gekennzeichnet, dass**
die erste Kennung die jeweils größte vergebbare Kennung von den die Übertragungswege kennzeichnenden Kennungen (LCNx, LCNy, LCNz) ist.

20. Verfahren nach einem der Ansprüche 1 bis 19, **dadurch gekennzeichnet, dass**
dem einen Teilsystemkanal (Cₓ) und dem anderen Teilsystemkanal (C_{y}) unterschiedliche Übertragungskapazitäten zugewiesen werden.

21. Verfahren nach einem der Ansprüche 1 bis 19, **dadurch gekennzeichnet, dass**
dem einen Teilsystemkanal (Cₓ) und dem anderen Teilsystemkanal (C_{y}) gleiche Übertragungskapazitäten zugewiesen werden.

22. Verfahren nach einem der Ansprüche 1 bis 21, **dadurch gekennzeichnet, dass**
das Umschaltkommando (SWITCHING_REQUEST, ATTRIBUTE_REQUEST) von einer ersten Telekommunikationsschnittstelle (DIFS) übertragen wird.

23. Verfahren nach einem der Ansprüche 17 bis 19 sowie nach Anspruch 20 und 22, **dadurch gekennzeichnet, dass** der erste Teilsystemkanal (C_{f}) bezüglich der Übertragungskapazität größer als ein zweiter Teilsystemkanal (Cₛ) ist, dass der erste Teilsystemkanal (C_{f}) dem ersten Übertragungsweg mit der ersten Kennung und der zweite Teilsystemkanal (Cₛ) einem zweiten Übertragungsweg mit einer zweiten Kennung zugeordnet ist und dass von dem ersten Teilsystemkanal (C_{f}) zum zweiten Teilsystemkanal (Cₛ) gewechselt wird, indem
a) ein Umschaltkommando (SWITCHING_REQUEST, ATTRIBUTE_REQUEST) von der ersten Telekommunikationsschnittstelle (DIFS) zu einer zweiten Telekommunikationsschnittstelle (DIPS) übertragen wird, mit dem die erste Telekommunikationsschnittstelle (DIFS) der zweiten Telekommunikationsschnittstelle (DIPS) signalisiert, dass die Informationen auf dem zweiten Teilsystemkanal (Cₛ) übertragen werden sollen,
b) eine Umschaltantwort (SWITCHING_CONFIRM, ATTRIBUTE_CONFIRM) von der zweiten Telekommunikationsschnittstelle (DIPS) zur ersten Telekommunikationsschnittstelle (DIFS) übertragen wird.

24. Verfahren nach einem der Ansprüche 17 bis 19 sowie nach Anspruch 21 und 22, **dadurch gekennzeichnet, dass** ein zweiter Teilsystemkanal (Cₛ) bezüglich der Übertragungskapazität gleich einem dritten Teilsystemkanal (Cₛ) ist, dass der zweite Teilsystemkanal (Cₛ) einem zweiten Übertragungsweg mit einer zweiten Kennung und der dritte Teilsystemkanal (Cₛ) einem dritten Übertragungsweg mit einer dritten Kennung zugeordnet ist und dass von dem zweiten Teilsystemkanal (Cₛ) zum dritten Teilsystemkanal (Cₛ) gewechselt wird, indem
a) ein Umschaltkommando (SWITCHING_REQUEST, ATTRIBUTE_REQUEST) von der ersten Telekommunikationsschnittstelle (DIFS) zur zweiten Telekommunikationsschnittstelle (DIPS) übertragen wird, mit dem die erste Telekommunikationsschnittstelle (DIFS) der zweiten Telekommunikationsschnittstelle (DIPS) signalisiert, dass die Informationen auf dem dritten Teilsystemkanal (Cₛ) übertragen werden sollen,
b) eine Umschaltantwort (SWITCHING_CONFIRM, ATTRIBUTE_CONFIRM) von der zweiten Telekommunikationsschnittstelle (DIPS) zur ersten Telekommunikationsschnittstelle (DIFS) übertragen wird.

25. Verfahren nach einem der Ansprüche 17 bis 19 sowie nach Anspruch 20 und 22, **dadurch gekennzeichnet, dass** der erste Teilsystemkanal (C_{f}) bezüglich der Übertragungskapazität größer als ein zweiter Teilsystemkanal (Cₛ) ist, dass der zweite Teilsystemkanal (Cₛ) einem zweiten Übertragungsweg mit einer zweiten Kennung zugeordnet ist, dass der erste Übertragungsweg mit der ersten Kennung für den ersten Teilsystemkanal (C_{f}) aufgebaut wird und dass von dem zweiten Teilsystemkanal (Cₛ) zum ersten Teilsystemkanal (C_{f}) gewechselt wird, indem
a) ein Umschaltkommando (SWITCHING_REQUEST, ATTRIBUTE_REQUEST) von der ersten Telekommunikationsschnittstelle (DIFS) zur zweiten Telekommunikationsschnittstelle (DIPS) übertragen wird, mit dem die erste Telekommunikationsschnittstelle (DIFS) der zweiten Telekommunikationsschnittstelle (DIPS) signalisiert, dass die Informationen auf dem ersten Teilsystemkanal (C_{f}) übertragen werden sollen,
b) eine Umschaltantwort (SWITCHING_CONFIRM, ATTRIBUTE_CONFIRM) von der zweiten Telekommunikationsschnittstelle (DIPS) zur ersten Telekommunikationsschnittstelle (DIFS) übertragen wird.

26. Verfahren nach Anspruch 25, **dadurch gekennzeichnet, dass**
der Aufbau des ersten Übertragungsweges mit der ersten Kennung für den ersten Teilsystemkanal (C_{f}) durch die erste Telekommunikationsschnittstelle (DIFS) angestoßen wird.

27. Verfahren nach Anspruch 25, **dadurch gekennzeichnet, dass**
der Aufbau des ersten Übertragungsweges mit der ersten Kennung für den ersten Teilsystemkanal (C_{f}) durch die zweite Telekommunikationsschnittstelle (DIPS) angestoßen wird.

28. Verfahren nach Anspruch 1 oder 2 oder Anspruch 1 und 6,
**dadurch gekennzeichnet , dass**
das Umschaltkommando (SWITCHING_REQUEST, ATTRIBUTE_REQUEST) und/oder die Umschaltantwort (SWITCHING_CONFIRM, ATTRIBUTE_CONFIRM) jeweils von der jeweiligen das Umschaltkommando (SWITCHING_REQUEST, ATTRIBUTE_REQUEST) bzw. die Umschaltantwort (SWITCHING_CONFIRM, ATTRIBUTE_CONFIRM) empfangenden Telekommunikationsschnittstelle (DIFS, DIPS) quittiert wird.

29. Verfahren nach Anspruch 28, **dadurch gekennzeichnet, dass**
das Umschaltkommando (SWITCHING_REQUEST, ATTRIBUTE_REQUEST) und/oder die Umschaltantwort (SWITCHING_CONFIRM, ATTRIBUTE_CONFIRM) ablehnend oder akzeptierend quittiert wird.

30. Verfahren nach Anspruch 29, **dadurch gekennzeichnet, dass**
im Fall der Ablehnung des Umschaltkommandos (SWITCHING_REQUEST, ATTRIBUTE_REQUEST) bzw. der Umschaltantwort (SWITCHING_CONFIRM, ATTRIBUTE_CONFIRM) die die jeweilige Ablehnung signalisierende Telekommunikationsschnittstelle (DIFS, DIPS) den Kanalwechsel mit der Übertragung des Umschaltkommandos (SWITCHING_REQUEST, ATTRIBUTE_REQUEST) anstoßen wird.

31. Verfahren nach Anspruch 29 oder 30, **dadurch gekennzeichnet, dass**
im Fall der Akzeptierung des Umschaltkommandos (SWITCHING_REQUEST, ATTRIBUTE_REQUEST) und der Umschaltantwort (SWITCHING_CONFIRM, ATTRIBUTE_CONFIRM) die Übertragung der Informationen nach der Wiederaufnahme der Übertragung an der Stelle einsetzt, wo die Übertragung unterbrochen worden ist.

32. Verfahren nach Anspruch 1 oder 2, Anspruch 1 und 6 oder einem der Ansprüche 28 bis 31, **dadurch gekennzeichnet, dass**
das Umschaltkommando (SWITCHING_REQUEST, ATTRIBUTE_REQUEST) von einer ersten Telekommunikationsschnittstelle (DIFS) oder einer zweiten Telekommunikationsschnittstelle (DIPS) übertragen wird.

33. Verfahren nach Anspruch 1 oder 2, Anspruch 1 und 6 oder einem der Ansprüche 28 bis 32, **dadurch gekennzeichnet, dass**
das Umschaltkommando (SWITCHING_REQUEST, ATTRIBUTE_REQUEST) und die Umschaltantwort (SWITCHING_CONFIRM, ATTRIBUTE_CONFIRM) in einer ersten Nachrichtenübertragungsschicht (DLC-Schicht) einer in Nachrichtenübertragungsschichten eingeteilten Nachrichtenübertragungsstruktur der Telekommunikationsschnittstelle (DIFS, DIPS) übertragen werden, in der im wesentlichen die Teilsysteminformationen übertragen werden.

34. Verfahren nach Anspruch 1 oder 2, Anspruch 1 und 6 oder einem der Ansprüche 28 bis 32, **dadurch gekennzeichnet, dass**
das Umschaltkommando (SWITCHING_REQUEST, ATTRIBUTE_REQUEST) und die Umschaltantwort (SWITCHING_CONFIRM, ATTRIBUTE_CONFIRM) in einer zweiten Nachrichtenübertragungsschicht (MAC-Schicht) übertragen werden, die bezüglich einer in Nachrichtenübertragungsschichten eingeteilten Nachrichtenübertragungsstruktur der Telekommunikationsschnittstelle (DIFS, DIPS) einer für die Übertragung der Teilsysteminformationen im wesentlichen vorgesehenen ersten Nachrichtenübertragungsschicht (DLC-Schicht) untergeordnet ist und dass das Umschaltkommando (SWITCHING_REQUEST, ATTRIBUTE_REQUEST) und die Umschaltantwort (SWITCHING_CONFIRM, ATTRIBUTE_CONFIRM) dabei derart übertragen werden, dass die Datenstruktur der ersten Nachrichtenübertragungsschicht (DLC-Schicht) unbeeinträchtigt bleibt.

35. Verfahren nach einem der Ansprüche 1 bis 34, **dadurch gekennzeichnet, dass**
ein ISDN-System als das Telekommunikationssystem (I-TTS) verwendet wird.

36. Verfahren nach Anspruch 35, **dadurch gekennzeichnet, dass**
die Systeminformationen auf dem D-Kanal übertragen werden.

37. Verfahren nach einem der Ansprüche 1 bis 36, **dadurch gekennzeichnet, dass**
ein DECT-System als das Telekommunikationsteilsystem (RW-TTS, DIIS) verwendet wird.

38. Verfahren nach einem der Ansprüche 1 bis 36, **dadurch gekennzeichnet, dass**
ein GSM-System als das Telekommunikationsteilsystem (RW-TTS, DIIS) verwendet wird.

39. Verfahren nach einem der Ansprüche 1 bis 36, **dadurch gekennzeichnet, dass**
ein PHS-System, ein WACS-System oder ein PACS-System als das Telekommunikationsteilsystem (RW-TTS, DIIS) verwendet wird.

40. Verfahren nach einem der Ansprüche 1 bis 36, **dadurch gekennzeichnet, dass**
ein "IS-54"-System oder ein PDC-System als das Telekommunikationsteilsystem (RW-TTS, DIIS) verwendet wird.

41. Verfahren nach einem der Ansprüche 1 bis 36, **dadurch gekennzeichnet, dass**
ein CDMA-System, ein TDMA-System, ein FDMA-System oder ein - bezüglich dieser genannten Übertragungsstandards - hybrides System als das Telekommunikationsteilsystem (RW-TTS, DIIS) verwendet wird.

42. Verfahren nach Anspruch 37, **dadurch gekennzeichnet, dass**
ein DECT INTERMEDIATE FIXED SYSTEM (DIFS) als die erste Telekommunikationsschnittstelle (DIFS) und ein DECT INTERMEDIATE PORTABLE SYSTEM (DIPS) als die zweite Telekommunikationsschnittstelle (DIPS) verwendet werden.

43. Verfahren nach Anspruch 37, **dadurch gekennzeichnet, dass**
der C_{f}-Kanal des DECT/GAP-Systems (DGS) als der eine Teilsystemkanal (Cₓ) oder als der andere Teilsystemkanal (C_{y}) bzw. als der erste Teilsystemkanal (C_{f}) verwendet wird.

44. Verfahren nach Anspruch 37, **dadurch gekennzeichnet, dass**
der Cₛ-Kanal des DECT/GAP-Systems (DGS) als der eine Teilsystemkanal (Cₓ) oder als der andere Teilsystemkanal (C_{y}) bzw. als der zweite Teilsystemkanal (Cₛ) und der dritte Teilsystemkanal (Cₛ) verwendet wird.

45. Verfahren nach einem der Ansprüche 1 bis 28 und nach Anspruch 37, **dadurch gekennzeichnet, dass**
das ATTRIBUTE_REQUEST-Informationselement des DECT-Standards als das Umschaltkommando (SWITCHING_REQUEST, ATTRIBUTE_REQUEST) verwendet wird.

46. Verfahren nach einem der Ansprüche 1 bis 28 oder Anspruch 45 und nach Anspruch 37, **dadurch gekennzeichnet, dass**
das ATTRIBUTE_CONFIRM-Informationselement des DECT-Standards als die Umschaltantwort (SWITCHING_CONFIRM, ATTRIBUTE_CONFIRM) verwendet wird.

47. Verfahren nach Anspruch 1 oder 2, Anspruch 1 und 6 oder einem der Ansprüche 28 bis 34 und nach Anspruch 37, **dadurch gekennzeichnet, dass**
das SUSPEND-Informationselement des DECT-Standards als das Umschaltkommando (SWITCHING_REQUEST, ATTRIBUTE_REQUEST) verwendet wird.

48. Verfahren nach Anspruch 1 oder 2, Anspruch 1 und 6, einem der Ansprüche 28 bis 34 oder Anspruch 47 und nach Anspruch 37, **dadurch gekennzeichnet, dass**
das RESUME-Informationselement des DECT-Standards als die Umschaltantwort (SWITCHING_CONFIRM, ATTRIBUTE_CONFIRM) verwendet wird.

49. Verfahren nach Anspruch 33, **dadurch gekennzeichnet, dass**
die DLC-Schicht (Data Link Control) des DECT-Standards als die erste Nachrichtenübertragungsschicht verwendet wird.

50. Verfahren nach Anspruch 34, **dadurch gekennzeichnet, dass**
die MAC-Schicht (**M**edium **A**ccess **C**ontrol) des DECT-Standards als die zweite Nachrichtenübertragungsschicht verwendet wird.
